# EUROPEAN PATENT SPECIFICATION

(11) **EP 4 438 248 B1**
(45) Date of publication and mention of the grant of the patent: **28.10.2026**
(21) Application number: 24166397.0
(22) Date of filing: 26.03.2024
(51) Int. Cl.: B25J 13/08

(54) **INDUSTRIAL ROBOT**
INDUSTRIEROBOTER
ROBOT INDUSTRIEL

(30) Priority: 31.03.2023 JP 2023058629
(43) Date of publication of application: 02.10.2024
(73) Proprietor: DENSO WAVE INCORPORATED, Chita-gun, Aichi-pref. 470-2297 (JP)
(72) Inventor: SUGIMOTO, Wataru, Chita-gun, Aichi-pref. 470-2297 (JP); SAITO, Takayuki, Chita-gun, Aichi-pref. 470-2297 (JP)
(74) Representative: Winter, Brandl - Partnerschaft mbB

(56) References cited:
- CN-A- 112 140 140
- KR-B1- 102 279 329
- US-A1- 2023 061 619
- US-B2- 10 444 098
- US-B2- 10 759 048
- G. THOLEY ET AL: "A Modular, Automated Laparoscopic Grasper with Three-Dimensional Force Measurement Capability", 2007 IEEE INTERNATIONAL CONFERENCE ON ROBOTICS AND AUTOMATION - 10-14 APRIL 2007 - ROMA, ITALY IEEE, PISCATAWAY, NJ, USA, 10 April 2007 (2007-04-10), pages 250 - 255, XP031388807, ISBN: 9781424406012, DOI: 10.1109/ROBOT.2007.363795

## Description

### Background

### [Technical Field]

The present invention relates to an industrial robot to which direct teaching is applied.

### [Related Art]

Conventionally, many techniques have been used to teach industrial robots, such as articulated robots, to teach their movements in advance.

One of these teaching techniques employed an operating terminal, such as a teaching pendant, to create an operating program that mimics the robot's movements. However, such technique does not always provide intuitive instructions to the robot. Thus, when an unfamiliar user performs teaching, the time required to teach the desired movement tends to long. In recent years, in order to improve the efficiency of teaching, a technique (which is called "direct teaching") has been proposed in which an operator directly touches the arm (or manipulator) of an industrial robot and moves the arm to teach the desired motions.

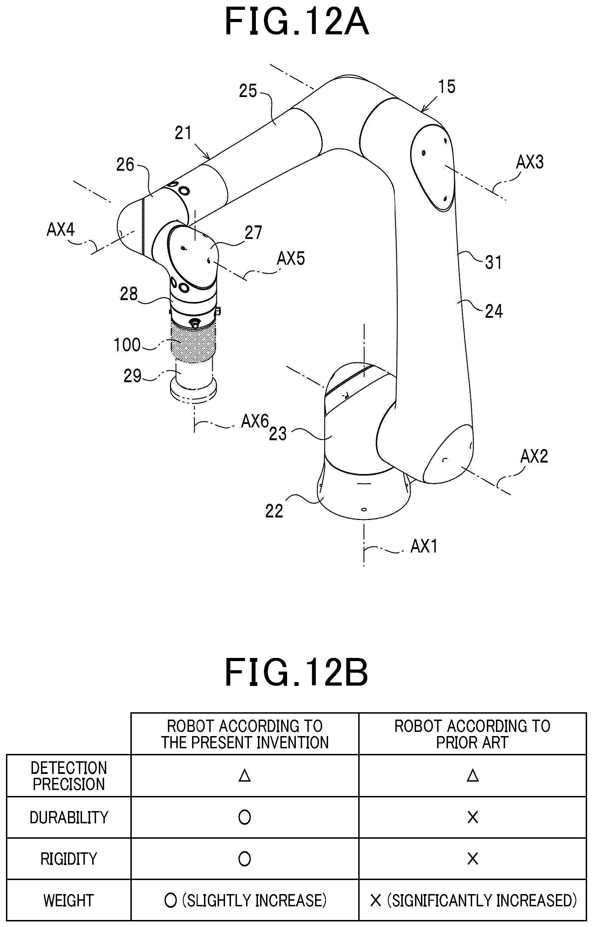

For this type of teaching, a structure with a force sensor (see the force sensor 100 in Fig. 12A) between the end part of the arm and the end effector attached to that end part can be employed. In this structure, when a user grasps the end effector of an industrial robot and pushes or pulls it, the motion of the industrial robot may be controlled according to the external force detected by the force sensor (see, for example, JP H11 - 23 1925 A and JP 2020- 203 374 A). Industrial robots often have a speed reducer attached to the drive unit. When the speed reducer is installed along with the industrial robot, assisting the user by operating the industrial robot is effective in improving teaching work efficiency, etc., because the functions of the speed reducer can be utilized. The next-coming prior art document US 2023/061619 A1 and document US 10 759 048 B2 disclose force sensors with concentric input and output bodies wherein the input body is attached in axial direction to an output shaft so that the detection of external forces is not optimal. Document XP031388807 describes a robotic tool with gauge sensors located on a flexible shaft element.

### [Problems to be solved]

A typical force sensor is equipped with a distorting body with intentionally lowered rigidity to facilitate strain detection. For this reason, such general force sensors are difficult to use in applications where a high force load is applied. When the industrial robot is operated at high speed, the end effector is prone to vibration due to the reduced rigidity, making high-speed and high-precision operation difficult. In other words, the basic performance of industrial robots (e.g., carrying capacity, operating speed, and operating precision) is easily degraded. Thus, there is a request to improve the assist function during direct teaching while minimizing the degradation of the basic performance of the industrial robot. Therefore, there is still room for improvement in the configuration for detecting external forces.

### Summary

The present invention has been made in view of the above-mentioned problems, and its main purpose is to fully demonstrate the assist function given to the operator when direct teaching is applied to industrial robots, while suppressing the degradation of the basic performance of industrial robots.

The object of the present invention is solved by the subject matter of claim 1. Further aspects are defined in the subclaims. More specifically, various modes of the present invention can be provided as follows:

One mode of the present invention provides an industrial robot (15) comprising:
a robot body (21) provided with an arm (31) formed with a plurality of arm configuring members (25, 26) linked in series via joints (JT) and drive mechanisms (35, 36) driving the joints and an end effector located at a tip end of the arm; and
a controller (93) controlling motions of the robot body, wherein
the plurality of arm configuring members (25, 26) include first and second arm configuring members (25, 26), the second arm configuring member (26) being located closely to the end effector (29) more than the first arm configuring member (25) is;
the drive mechanisms (35, 36) include
a drive unit (35D) fixed to the first arm configuring member (25) and configured to have an actuator (36D) and a speed reducer (37D) attached to the actuator (36D);
a power transmission shaft (55), the power transmission shaft (55) being fixed to the speed reducer (37D) and the second arm configuration member (26) such that the power transmission shaft (55) composes part of a linkage member linking the first and second arm configuring members (25, 26) to each other and transmits power from the drive unit (35D) to the second arm configuring member (26); and
a plurality of strain gages (41, 42) installed on the power transmission shaft (55) and each configured to detect strain caused in the power transmission shaft (55) wherein the strain gages are attached or mounted as specified in claim 1, and
the controller (93) includes a determination unit (S102), the determination unit (S102) determines a magnitude and a direction of an external force exerted onto the robot body (21), based on detection signals outputted from the strain gauges (41, 42), the controller (93) being adapted to drive and control the drive unit (35D) based on determined results for the magnitude and direction of the external force.

The power transmission shaft is a component whose primary purpose is to ensure a rigidity appropriate to support the configuration provided on the end effector side. In other words, the power transmission shaft is not a part that intentionally lowers rigidity to generate a large amount of strain, as in a case where a distorting body is used. Therefore, even if the robot body is pushed or pulled during direct teaching and the external force is transmitted to the power transmission shaft, strain to be generated is very small.

For this reason, as one feature, the strain gages are attached to the power transmission shaft. This attachment can suppress a decrease in rigidity of the robot body and an increase in end effector weight, compared to the conventional configuration in which a force sensor equipped with a distorting body is attached to the end of the arm. This is desirable in terms of suppressing the decline in basic performance of industrial robots, such as motion speeds and payload. The position of the drive unit, at which the drive unit weighs more, can be shifted to the base side of the arm by using the power transmission shaft. Therefore, it can be said that this can contribute to the enhancement of basic performances.

In addition, when a force sensor is attached to the end effector, it becomes difficult to identify the external force when the base side of the arm is pushed or pulled more than the force sensor. In other words, in order to successfully demonstrate the specified function by the force transducer, there are many restrictions related to the user's grasping position. On this point, according to the configuration in which a strain gage is attached to the power transmission shaft as shown in this feature, the external force can be identified at a position far from the end effector of the robot body. Therefore, it can contribute to alleviating the restrictions on the user's grasping position.

As mentioned above, the strain generated in the power transmission shaft is minute. Therefore, if the strain is detected by a single strain gage, it is likely to be affected by noise, etc., and the accuracy of the external force identification may be reduced. If the accuracy becomes low, the dead zone will become large, and it will be difficult to provide an assist in a timely manner. In particular, a delay in the initial movement of the assist, etc., which prevents the assist function from being properly demonstrated, can be a factor that reduces user satisfaction. In this regard, the configuration shown in this feature suppresses the decline in accuracy by using multiple strain gages. Even if multiple strain gages are used together, a certain size can be expected for the power transmission shaft, which is desirable in increasing the number of strain gages and suppressing accuracy degradation.

For the foregoing reasons, the configuration shown in this feature can contribute to improving the assist function during direct teaching while minimizing the degradation of the basic performance of the industrial robot.

### Brief Description of the Drawings

In the accompanying drawings:
Fig. 1 is a perspective view showing a robot system equipped with an industrial robot, according to a first embodiment;
Fig. 2 is a block diagram showing an electric configuration of the robot system according to the first embodiment;
Fig. 3A is an illustration conceptually showing how direct teaching is performed;
Fig. 3B is a flowchart showing an assist process performed by a drive control unit equipped in the robot system according to the first embodiment;
Fig. 4 is a partial cross-sectional view showing an internal structure of the arm of the robot;
Fig. 5A is a cross-sectional view of a power transmission shaft employed in the first embodiment;
Fig. 5B is an illustration outlining how arm members (links) are connected with each other with a speed reducer arranged therein;
Fig. 6A is a sectional view of the power transmission shaft;
Fig. 6B is a sectional view taken along an A-A line in the sectional configuration shown in Fig. 6A;
Figs. 7A and 7B are graphs showing resulting from analyzing models which represents the power transmission shaft;
Fig. 8 is a graph outlining how a fitting position of a strain gauge can be decided;
Fig. 9A is a sectional view showing a power transmission shaft according to a second embodiment;
Fig. 9B is a graph exemplifying analysis results of models which represents the power transmission shaft according to the second embodiment;
Fig. 10 is a sectional illustration outlining a power transmission shaft according to a third embodiment;
Figs. 11A and 11B are sectional views each showing structures according to prior art; and
Figs. 12A and 12B are outlined illustrations for explaining a robot body according to the prior art and comparison of the robot main performances between the prior art and the present disclosure.

### Descriptions of the Preferred Embodiments

### <First embodiment>

A first embodiment of a robot system equipped with a vertically articulated industrial robot (hereinafter referred to as "robot") that engages in a given task on a factory production line, etc., will now be described below with reference to the drawings.

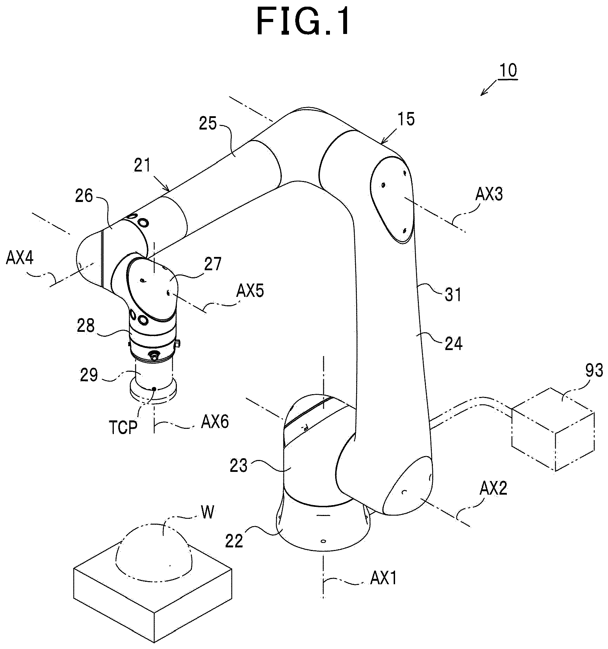

As shown in Fig. 1, the robot system 10 has a robot 15, the main body 21 (robot body) of which has a base member 22 fixed to a pedestal or the like and a shoulder member 2 3 which is supported by the base member 22. The main body 21 also has a lower arm member 24 supported by the shoulder member 23, a first upper arm member 25 supported by the lower arm member 24, and a second arm member 25 supported by the first upper arm member 25, a second upper arm member 26 supported by the second upper arm member 26, a wrist portion 27 supported by the second upper arm member 26, and a flange portion 28 supported by the wrist portion 27.

The base member 22 and the shoulder member 23 have a first joint connecting the base member 22 and the shoulder member 23. The shoulder member 23 is rotatable in the horizontal direction about the connecting axis (the first axis AX1) of the first joint. The shoulder member 23 and the lower arm member 24 have a second joint connecting the shoulder member 23 and the lower arm member 24. The lower arm member 24 is rotatable in the vertical direction about the connecting axis of the second joint (the second axis AX2). The lower arm member 24 and the first upper arm member 25 have a third joint connecting the lower arm member 24 and the first upper arm member 25. The first upper arm member 25 is rotatable in the vertical direction about the connecting axis of the third joint (the third axis AX3). The first upper arm member 25 and the second upper arm member 26 have a fourth joint connecting the first upper arm member 25 and the second upper arm member 26. The second upper arm member 26 is rotatable in the twisting direction about the connecting axis of the fourth joint (the fourth axis AX4). The second upper arm member 26 and the wrist portion 27 have a fifth joint connecting the second upper arm member 26 and the wrist portion 27. The wrist portion 27 is rotatable in the vertical direction about the connecting axis of the fifth joint (the fifth axis AX5). The wrist portion 27 and the flange portion 28 have a sixth joint connecting the wrist portion 27 and the flange portion 28. The flange portion 28 is rotatable in the twisting direction about the connecting axis of the sixth joint (the sixth axis AX6).

The shoulder member 23, the lower arm member 24,the first upper arm member 25, the second upper arm member 26, the wrist portion 27, and the flange portion 28 are connected in series with their elements. This connection constitutes an arm 31 (manipulator) in the robot body 21. An end effector 29 is attached to the flange portion 28 at the end of the arm 31. For example, if a polishing device is employed as the end effector 29, the workpiece W can be polished, and if a hand-type gripper is employed, the workpiece W can be gripped.

As described in detail below, the arm 31 is equipped with a motor unit for each joint, which has a servo motor and speed reducer (specifically, a wave gear unit) as an electric actuator to rotate the joint. Some of the joints are equipped with transmission mechanisms (including power transmission shafts as described below) that transmit the power generated in the motor unit concerned. The servo motor is also supplied with a rotary encoder. Those servo motors and rotary encoders are connected to a robot controller 93 attached to the robot body 21.

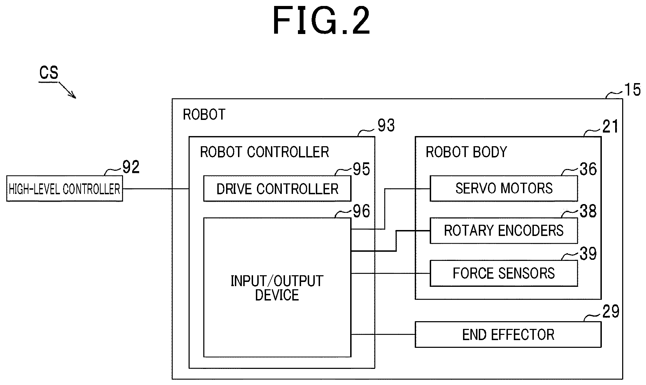

The electrical configuration (i.e., the control system CS) of the robot system 10 is described in a supplementary manner with reference to Fig. 2.

The robot controller 93 has a drive control unit 95 that performs various types of control including drive control of the servo motor 36, and other designated elements, as well as an input/output unit 96. The input/output unit 96 is responsible for input/output of signals to/from the servo motor 36, rotary encoder 38, and high-order controller 92 (e.g., teaching pendant or PC). The high-order controller 92 is provide with a control unit in which applications are installed to assist the user in setting motions of the robot 15 (including off-line teaching and direct teaching). Information indicating the motion instructions set by the teaching is stored in a memory of the high-order controller 92, and this information is sent to the robot controller 93 when the robot 15 is to be automatically operated. This motion instructions include information indicating control points (motion target positions) of an end effector (that is, tool center points TCP: see Fig. 1) of the robot 15.

The drive control unit 95 of the robot controller 93 receives motion instructions from the high-order controller 92, reads an operating program corresponding to the motion instructions from the program storages, and identifies the foregoing control points. Furthermore, the drive control unit 95 generates a target trajectory that smoothly connects the control points identified from the motion instructions and the current position. The drive control unit 95 sequentially transmits interpolated positions, which are the positions subdivided from the target trajectory, to the servo amplifiers (illustration omitted) built into the robot body 21. The servo amplifiers are connected, respectively, to the servo motors 36 and rotary encoders 38. The servo amplifiers control the drive of servo motors 36 for the respective joints, etc., based on the instructions from the drive control unit 95 and the rotation angles detected by the rotary encoders 38.

In the robot system 10 shown in the present embodiment, the robot system has, as control modes, a teaching mode, which is set when teaching the robot 15, and an automatic operation mode, which is set when the robot 15 is automatically operated according to the teaching contents. The teaching mode is used for teaching the robot 15. The robot 15 shown in the present embodiment has a speed reducer attached to the servo motor 36 as described above. As a result, the resistance to the motors received when changing postures of the robot 15 tends to be large (i.e., heavy to the motors in the joints).

More practically, when the control mode is set to the teaching mode, the user tries to change the postures of the robot 15 by applying external forces to the arm 31 (for example, by pushing or pulling the arm). In this case, the magnitudes and directions of the external forces applied by the user are identified (estimated), and the drive control of servo motor 36 is performed according to the determined results (estimated results) to reduce resistance to the motors caused during posture changes. This is desirable for improving workability during the teaching. The arm 31 of the robot 15 is equipped with a force sensor to detect external forces applied to the robot 15, the details of which will be described later. This force sensor and its related configuration are characteristic elements of the present embodiment.

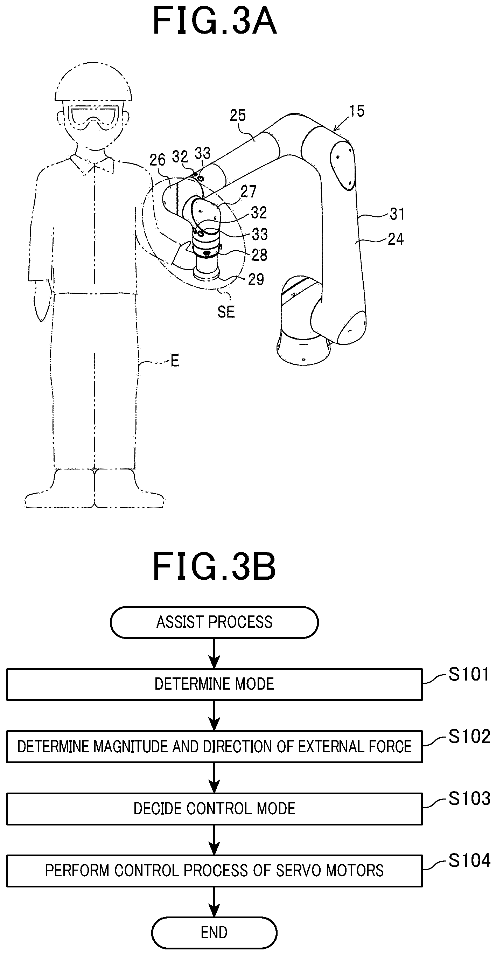

As shown in Figure 3A, during the direct teaching, the end effector of robot 15 is moved to a desired spatial position. In this case, the user pushes and pulls the arm 31 by directly touching and moving the end effector. However, if the user tries to push and pull a portion of the arm 31 which is closer to the base than the third joint is, the user will be aware of inverse kinematics, which makes it difficult to manipulate the arm 31.

Therefore, realistically, the user is more likely to grasp the arm configuring member located at a position of the arm which is closer to the end of arm 31 than the first upper arm member 25 is, i.e., the second upper arm member 26, wrist portion 27, and flange portion 28, end effector 29. The arm 31 shown in the present embodiment is provided with several operation buttons (resistance switching buttons 32 and position acquiring buttons 33) that are operated by the user during the direct teaching. However, in consideration of the above circumstances, at least one set of the buttons is located near the end effector of the robot 15 (specifically, at the flange portion 28).

While the direct teaching is being performed, the assist function described above allows the robot 15 to easily change its postures even with small force applied to the arm. On the other hand, when fine position adjustment is performed, it may be easier to work with greater resistance applied to the arm. In the present embodiment, a higher assist mode in which the resistance is relatively small and a lower assist mode in which the resistance is relatively large are provided. These modes can be switched by operating the resistance switching buttons 32. By making it possible for the user to switch between the lower assist mode and the higher assist mode at user's will, the convenience of the system is improved.

When the user operates the above position acquiring buttons 33, the acquired commands are sent to the high-order controller 92. Upon receiving the acquired commands, the high-order controller 92 acquires encoder information, which is information indicating the rotation angle of each axis, from the rotary encoders 38, etc. of the robot 15. The high-order controller 92 stores the information indicating the control points (position information of the end effector) identified from the encoder information, in the memory of the high-order controller 92 as teaching data.

Next, with reference to Fig. 3B, the processing for the assist will now be explained, which is performed as part of the periodic processing by the drive control unit 95 of robot controller 93 when the control mode in the control system is in the teaching mode.

In the process for assist, first of all, it is identified which mode is currently set, lower assist mode or higher assist mode (step S101). Next, the magnitude and direction of the external force are identified based on the information from the force sensor described above (step S102). Thereafter, the control mode of each servo motor 36 is determined according to the currently set mode and the magnitude and direction of the identified external force (step S103). The lower assist mode and the higher assist mode are similar in that the output is adjusted according to the magnitude of the external force applied by the user. The servo motor 36 is then driven using the determined control mode (step S104). This allows the robot 15 to move in accordance with the user's intention and reduces the operation force (external force) required to change the posture of the robot 15.

Here, the correlation between force and current value can be linear in each of the servo motors 36. If the relationship is linear, the magnitude and direction of the external force applied by the user can be estimated by monitoring the current value of the servo motor 36. However, the current value is often non-stationary during robot 15 operation, and it can be difficult to estimate accurately due to friction and heat losses generated by oil seals, bearings, speed reducers, and other components. In other words, it is often difficult to improve the accuracy and responsiveness of the assist when trying to implement the above-mentioned assist based on the direction and magnitude of the external force estimated from the current value of servo motor 36.

On the other hand, if a dedicated force sensor with a distorting body is mounted on arm 31, for example, it can contribute to improving the accuracy and responsiveness of the assist function. However, in this type of force sensor, the size of the distorting body, or force sensor, becomes larger if a certain amount of large load or external force is allowed. Because of this, the mounting position of the force sensor is essentially at the end part of the arm 31, specifically between the range portion 28 and the end effector 29 (see force sensor 100 in Figure 12). However, such an arrangement raises the following concerns. That is, even if the position of the base side of the arm 31 is manipulated with respect to the force sensor, it is often not possible to detect an external force. Therefore, when performing direct teaching, the user is effectively forced to grasp the part of the robot that is ahead of the force sensor (e.g., end-effector 29). In other words, the grasping position is restricted.

This stronger restriction on the grasping position can greatly reduce user convenience. In addition, if the robot 15 is operated at high speed, the end effector becomes more oscillatory, and as a result, high speed operation becomes more difficult. Furthermore, there is concern that the addition of additional sensors will reduce the robot's portability and also make it difficult to make the robot smaller (i.e., slimmer).

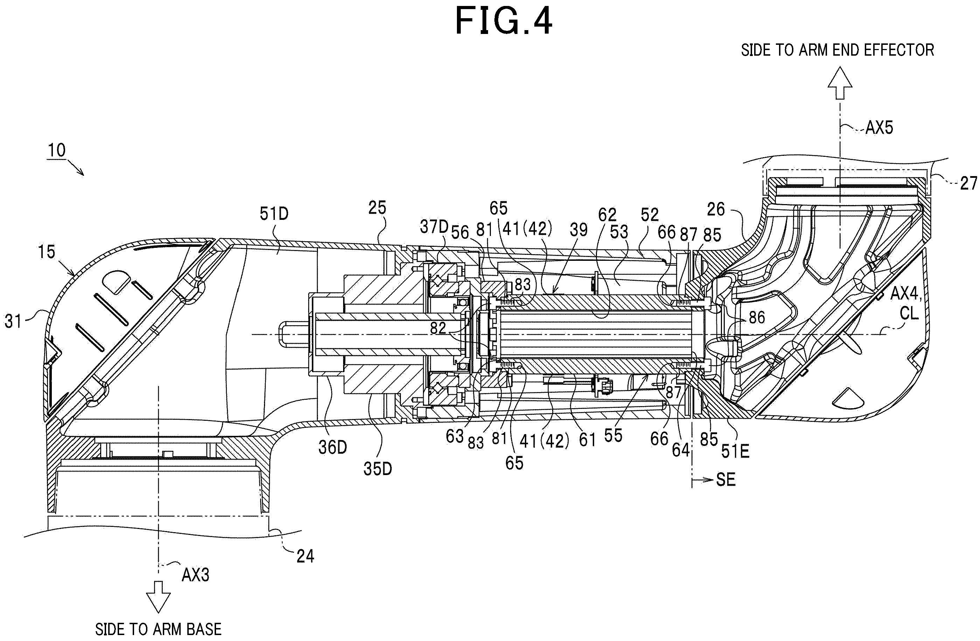

As described in detail above, there is still room for improvement in the configuration related to the detection of external force in order to improve the assist function in direct teaching while avoiding a decrease in the basic performance of the robot. One of the features of this embodiment is that it is devised in consideration of such circumstances. The device is explained below with reference to Fig. 4. Fig. 4 shows a partial cross-sectional view of the internal structure of arm 31. The fourth joint connecting the first upper arm member 25 and the second upper arm member 26 and its surrounding parts are shown.

In the following explanation, "D" is added at the end of some reference numbers for the structure related to first upper arm member 25, and "E" is added at the end of some reference numbers for the structure related to second upper arm member 26. In addition, "F" is appended at the end of reference numbers for the wrist portion 27, and "G" is appended at the end of reference numbers for the flange portion 28. In this way, the reference code is differentiated for each part as appropriate.

The first upper arm member 25 has a high-rigidity (metal) housing 51D that constitutes the framework of the first upper arm member 25 and a motor unit 35D serving as a drive unit for the fourth joint. The motor unit 35D is fixed to the housing 51D. The motor unit 35D has a servo motor 36D and a speed reducer 37D attached to the servo motor 36.

The speed reducer 37D has a circular rigid internal gear (which can be referred to as circular spline) with internal teeth formed on its inner circumference. The rigid internal gear is fixed to a mating member (i.e., an attachment 56) using bolts.

Inside the rigid internal gear, there is arranged a flexible internal gear (which can be referred to as a flex spline) made of spring steel. The flexible internal gear has a thin-walled cylindrical main part and a flange portion (which is a diaphragm) formed at one end part of the main part. The flexible internal gear has the range portion fixed to the mating member (i.e, the housing 51D) using bolts.

Outer teeth are formed on the outer surface of the main part of the gear, which is located closer to the end part, and are engaged with the inner teeth of the rigid internal gear. A wave generator is fitted inside the main part of the gear, specifically in the area where the outer teeth are formed. The wave generator has a circular wave bearing whose outer circumference faces the inner circumference of the flexible internal gear (main part of the gear) and an oval-shaped rigidity cam housed inside the wave bearing. The wave generator has an elliptical shape as a whole because the wave bearing is deformed to fit the outer shape of the rigidity cam.

Specifically, the wave bearing consists of an outer ring in contact with the inner surface of the main part of the gear, an inner ring fixed to the rigid cam, and a plurality of balls arranged between the outer ring and inner ring. A connection portion for connecting the shaft portion (input shaft) of servo motor 36D is formed in the center portion of the rigid cam. The rigid cam rotates together with the inner ring following the shaft portion of servo motor 36D. As a result, the outer ring is elastically deformed through the ball, and the flexible internal gear in contact with the outer ring also elastically deforms to follow said outer ring.

The outer teeth of the flexible internal gear have outer teeth located at both ends of the long axis of the oval-shaped wave generator (at two points on both end parts in the long radial direction). The outer teeth located at both ends are partially engaged with the inner teeth of the rigid internal gear. As the wave generator rotates, the engagement position of the outer teeth with the inner teeth shifts in the circumferential direction. Since the number of outer teeth is set to be two fewer than the number of inner teeth, for example, relative rotation occurs between the flexible internal gear and rigid internal gear. Therefore, for example, by fixing the flexible internal gear, the rigid internal gear becomes the output part and the decelerating rotational output can be extracted from the rigid internal gear. The mating member to which the flexible internal gear is fixed and the mating member to which the rigid internal gear is fixed may be interchanged.

In this form, rigid internal gear, flexible internal gear, and wave generator (rigid cam) are formed coaxially. Any of the gears and cam rotate about the central axis line CL (i.e., the above fourth axis AX4).

The first upper arm member 25 has a high-rigid power transmission shaft 55 (made of metal) which is coaxial with the central axis line CL. One end part 63 of the power transmission shaft 55 is fixed to the motor unit 35D (i.e, to the rigid internal gear of the speed reducer 37D) via the foregoing attachment 56 of high rigidity (which is made of metal). Specifically, the power transmission shaft 55 has a hollow shape extending parallel to the central axis line CL. The end part 63 of the power transmission shaft 55 has a bolt hole 65 extending in the same direction as the central axis line CL. A bolt 81 is inserted into a through hole formed in the attachment 56 in a direction directed from the motor unit 35D. The shaft portion (threaded portion) 83 of the bolt 81 engages the bolt hole 65, thereby securing the power transmission shaft 55 to the attachment 56. Furthermore, this attachment 56 is fixed to the motor unit 35D (i.e, the speed reducer 37D). As a result, the power transmission shaft 55 is integrated with the motor unit 35D (i.e., the speed reducer 37D).

The other end part 64 of the power transmission shaft 55 also has a bolt hole 65 extending in the same direction as the central axis line CL. The second upper arm member 26 has a high-rigid housing 51E (made of metal) that constitutes the framework of the second upper arm member 26. The other end part 64 of the power transmission shaft 55 is fixed to the housing 51E. Specifically, the end part 64 of the power transmission shaft 55 has a bolt hole 66 that extends in the same direction as the central axis line CL. The shaft portion (threaded portion) 87 of bolt 85, which is inserted from the end side of arm 31 into the through hole formed in housing 51E, engages bolt hole 66. As a result, the power transmission shaft 55 is integrated with the housing 51E. In other words, when the power transmission shaft 55 rotates around the central axis line CL, the housing 51E (second upper arm member 26) rotates accordingly. Therefore, the angle (direction) of the fourth joint changes according to the power generated in the motor unit 35D.

By using the power transmission shaft 55, the motor unit 35D for the fourth joint can be placed closer to the third joint. In other words, the motor unit 35D, which is a heavy object, can be placed away from the fourth joint. This is desirable in reducing the load when the robot 15 is operated, and can contribute to the realization of high-speed operation and other higher performances of the robot 15.

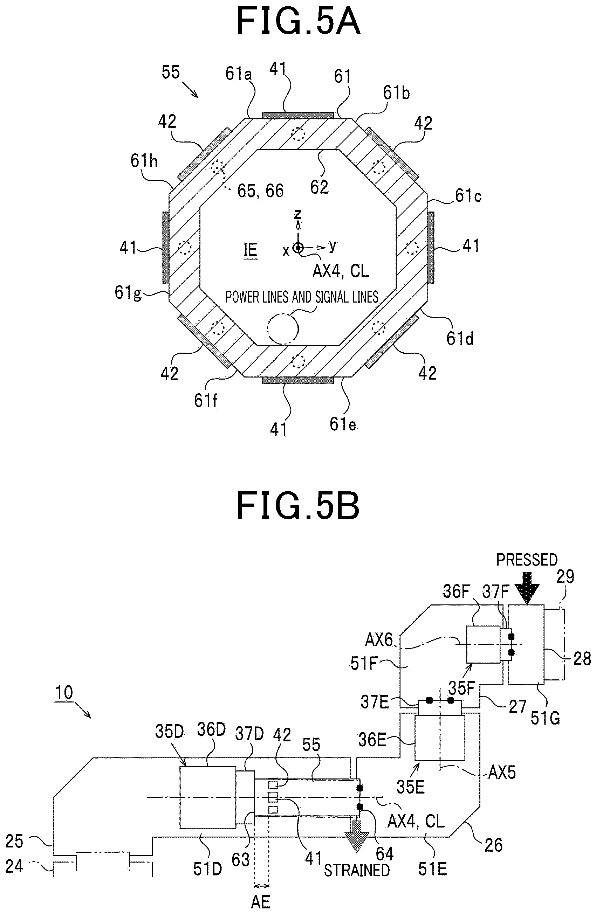

As described, the power transmission shaft 55 is formed in a hollow shape extending parallel to the central axis line CL. As shown in Fig. 5A, the inner space IE of this power transmission shaft 55 is the arrangement space for various wiring such as signal lines extending from the rotary encoder 38 and power lines extending from the servo motor 36. The outer surface 61 of the power transmission shaft 55 consists of eight planes (plane areas 61a to 61h) surrounding the central axis line CL. In other words, the outer surface 61 is formed so that the cross section orthogonal to the central axis line CL is a regular octagon.

Two types of strain gages 41, 42 are attached to the outer surface 61 of the power transmission shaft 55. Specifically, one type is four tension/compression strain gages 41 that can detect the strain (vertical strain) produced in the same direction as the central axis line CL (tensile and compressive direction). The other type is four shear strain gages 42 that can detect strains (shear strains) produced in the direction that intersects the central axis line CL due to shear stress.

More precisely, tension/compression strain gages 41 are located in plane areas 61a, 61c, 61e, 61g of the outer surface 61. In addition, the shear strain gages 42 are also located in plane areas 61b, 61d, 61f, 61h of the outer surface 61. Those tension/compression strain gages 41 and shear strain gages 42 are alternately arranged around the central axis line CL. In other words, the respective tension/compression strain gages 41 are arranged symmetrically around the central axis line CL. The receptive shear strain gages 42 are arranged symmetrically around the central axis line CL in the same way as tension/compression strain gages 41. Both the tension/compression strain gages 41 and shear strain gages 42 are located closer to end part 63 of power transmission shaft 55. The distances from the end part 63 (end face) to the tension/compression strain gages 41 and shear strain gages 42 are set to be equal to each other.

The tension/compression strain gages 41 and shear strain gages 42 have a certain size (thickness) from the viewpoint of improving performance, such as improving detection accuracy. Therefore, by preparing 61a - 61h plane areas for mounting, the peeling of these tension/compression strain gages 41 and shear strain gages 42 can be prevented.

The tension/compression strain gage 41 and shear strain gage 42 are connected to the robot controller 93 via attached detectors (not shown). The robot controller 93 calculates axial forces and torques based on the detection signals received from those detectors. The axial forces are an axial force in the x-axis direction, an axial force in the y-axis direction, and an axial force in the z-axis direction in the x-y-z Cartesian coordinate system (e.g., the coordinate system according to the first upper arm member 25). The torques are a rotational torque about the x-axis, a rotational torque about the y-axis, and a rotational torque about the z-axis. The robot controller 93 performs drive control of each of the servo motors 36 based on calculated results (i.e., determined results) of the axial forces and rotational torques. In other words, in the present embodiment, by adopting the tension/compression strain gage 41 and shear strain gage 42 attached to the power transmission shaft 55 and the detectors attached to those strain gages 41 and 42, the force sensor 39 is composed.

As mentioned above, signal lines from the rotary encoder 38 and power lines from the servo motor 36 are accommodated inside the power transmission shaft 55 (i.e., in inner space IE). On the other hand, tension/compression strain gage 41 and shear strain gage 42 are placed on the outer surface 61 of the power transmission shaft 55. This avoids contact between those signal lines and/or power lines and the tension/compression strain gages 41 and shear strain gages 42. This is desirable in order to suppress the occurrence of noise, failures, etc. caused by such contact.

Referring again to Fig. 4, the power transmission shaft 55 is covered by an inner and outer double cover (i.e., an outer cover 52 and an inner cover 53) supported by the housing 51D. Thus, exposure of the power transmission shaft 55 to the outside is avoided. The outer cover 52 and inner cover 53 are both made of synthetic resin. Therefore, the rigidity (e.g. tortional rigidity) of the covers is lower than that of housing 51D, motor unit 35, power transmission shaft 55 and attachment 56. In other words, the outer cover 52 may flex to some extent when an external force is applied to the first upper arm member 25 or the like. However, a gap is formed between the outer cover 52 and the inner cover 53, and also between the inner cover 53 and the outer surface 61 of the power transmission shaft 55. Since the inner cover 53 is cantilevered by the housing 51D, the strain gages 41, 42 are located near its base. Therefore, even if the outer cover 52 bends and its bent part hits the inner cover 53, or even if both the covers 52 and 53 bend together, it is unlikely that the inner cover 53 will come into contact with the strain gages 41 and 42.

The outer cover 52 and inner cover 53 are not fixed to the second upper arm member 26, thus providing no function to transmit power, etc.

With reference to Fig. 5B, there is provided a supplementary explanation of the connection structure of each of the arm configuring members (i.e., the first upper arm member 25, the second upper arm member 26, the wrist portion 27, and the flange portion 28), with reference to Fig. 5B.

In the present embodiment, as described above, the motor unit 35D is installed in the first upper arm member 25, and the housing 51D of the first upper arm member 25 and one end (end part 63) of the power transmission shaft 55 are fixed to the speed reducer 37D of the motor unit 35D. The housing 51E of the second upper arm member 26 is fixed to the other end (end part 64) of the power transmission shaft 55. As a result, the first upper arm member 25 and the second upper arm member 26 are connected via the speed reducer 37D. The motor unit 35E is installed in the second upper arm member 26, and the housing 51E of the second upper arm member 26 and the housing 51F of the wrist portion 27 are fixed to the speed reducer 37E of the motor unit 35E. As a result, the second upper arm member 26 and wrist portion 27 are connected via the speed reducer 37E. The housing 51F of the wrist portion 27 and the housing 51G of the flange portion 28 are fixed to the speed reducer 37F of the motor unit 35F installed in the wrist portion 27. As a result, the wrist portion 27 and flange portion 28 are connected via the speed reducer 37F. The end effector 29 is fixed to the housing 51G of the range portion 28.

In other words, the arm configuring members (i.e., the second upper arm member 26, wrist portion 27, and flange portion 28) and the end effector 29 can be understood to be supported by the power transmission shaft 55 of the first upper arm member 25 at a position of the arm which is shifted to the end effector than the first upper arm member 25 is. The power transmission shaft 55, like the housing 51, constitutes part of the structure in the arm 31. Therefore, a user pushes or pulls the robot 15 by grasping the second upper arm member 26, wrist portion 27, flange portion 28, or end effector 29. In this case, a pushing and/or pulling force (serving as an external force) is transmitted to the power transmission shaft 55 of the first upper arm member 25.

The power transmission shaft 55 is formed to have a higher rigidity (tortional rigidity) than the motor unit 35 (speed reducer 37) as well as the housing 51 and attachment 56. In other words, when the user pushes or pulls the wrist portion 27, the flange portion 28, etc., the force is transmitted to the power transmission shaft 55. As a result of this transmission, strain is generated in the power transmission shaft 55, but the amount of strain is small.

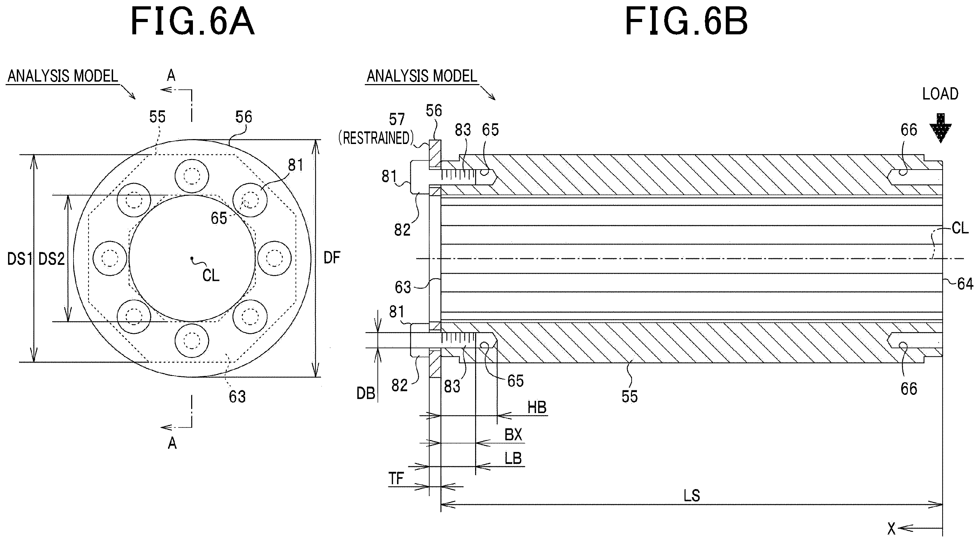

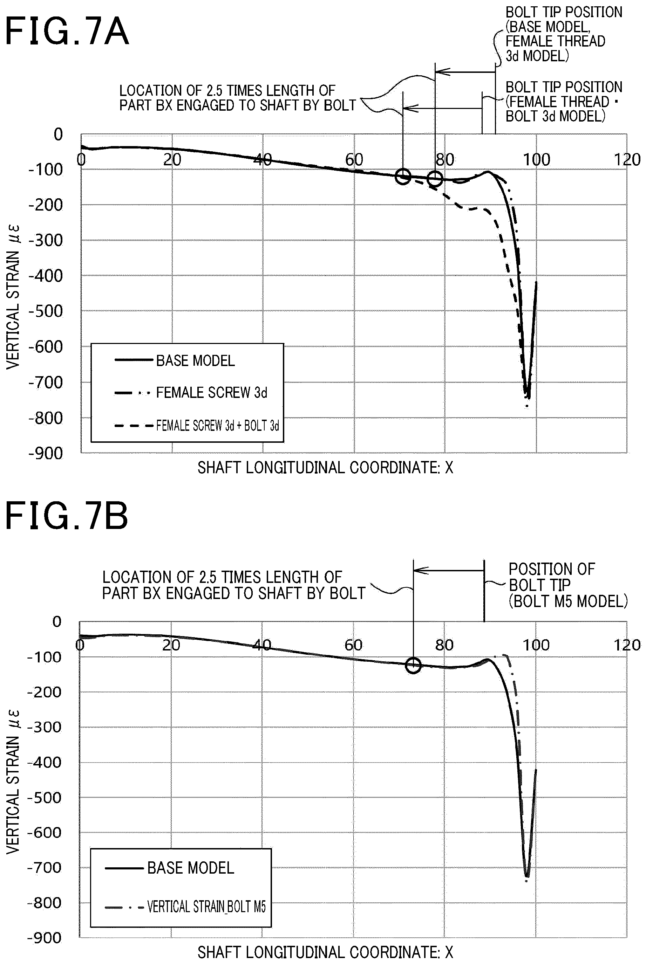

As already explained, in the present embodiment, strain gages 41 and 42 are attached to the power transmission shaft 55. On the other hand, by devising the position of these strain gages 41 and 42, a configuration that can successfully detect minute strains is realized. Specifically, the train gages 41 and 42 are positioned on the power transmission shaft 55 with a deviation toward the end part 63. More precisely, the strain gages 41 and 42 are positioned in the range where the relationship between the distance from the end face of the power transmission shaft 55 and the generated strain is linear. In the linearity-maintained region, the strain gages 41 and 42 are arranged at positions where the strain becomes a maximum or thereabout. Such an arrangement position presenting a maximum strain or thereabouts is defined as a position separated from the end face of the end part 63 by a predetermined distance which is 2.5 times larger than a length of the portion which is engaged with the bolt hole 65 on the shaft portion 83 of the bolt 81. This detailed arrangement was determined based on the results of numerical analysis of the strain generated in the power transmission shaft 55. The model and conditions of the numerical analysis are described below with reference to Fig. 6, followed by a description of the results of the numerical analysis with reference to Figure 7.

As shown in Fig. 6, the model used in the numerical analysis consists of three models. The first model is the power transmission shaft model (hereinafter simply referred to as power transmission shaft 55), which follows the basic structure of power transmission shaft 55 as it is. The second model is a flange model (hereinafter simply referred to as "flange portion 67"), which is a simplified model of the fixing object of the power transmission shaft 55. The third model is a bolt model (hereinafter simply referred to as bolt 81), which is a model of bolt 81. In Fig. 6, for convenience, each part of the models is marked with the same reference numerals as the reference numerals of the actual configurations used to create the models.

First, the various conditions assumed in performing this numerical analysis are explained. The following assumptions are used. The actual power transmission shaft 55 has fixed ends at both ends. On the other hand, in the model for analysis, one end (end part 63) of the power transmission shaft 55 is the fixed end and the other end (end part 64) is the free end, for convenience. A bolt 81 is inserted into the through hole formed in attachment 56 (range portion 57), and its shaft portion 83 is engaged with bolt hole 65 of power transmission shaft 55. A bolt pretension (specifically, 4500 N) is applied to the engagement portion (fastening portion) of each bolt 81. Here, the flange portion 57 is restrained (fixed on the space) and a pressing force (specifically 1000 N) is applied to the END part 64 in the direction orthogonal to the central axis line CL. The analysis is performed to determine the value of strain (vertical strain) at each part when viewed at coordinate X, where the free end face is at the origin (0 mm).

The results of the analysis were found to vary depending on various conditions. These various conditions are: a total length LS of the power transmission shaft 55, an outer diameter DS1 of the power transmission shaft 55, an inner diameter DS2 of the power transmission shaft 55, a depth HB of the bolt hole 65 (female thread), a thickness TF of the flange portion 57, outer diameter DF of flange portion 57, bolt diameter DB of bolt 81, length of bolt 81 (shaft portion 83), a thickness TF of the flange portion 57, an outer diameter DF of the flange portion 57, a bolt diameter DB of the bolt 81, a length LB of the bolt 81 (the shaft portion 83), material properties of the power transmission shaft 55, and material properties of the flange portion 57.

Here, when the numerical values of elements such as the outer diameter DS1 and total length LS of the power transmission shaft 55 are changed, the shapes of the graphs showing the analysis results are similar, and the linear range described below is found to be unaffected significantly. On the other hand, when elements such as bolt diameter DB and length LB of bolt 81, i.e., elements that cause different engagement configurations, are changed, it was found that the linear range described above is also easily affected. Therefore, the analysis results obtained when these highly influential conditions were changed are explained below with reference to the example shown in Fig. 7A.

In the example shown in Fig. 7A,
total length LS of power transmission shaft 55 = "100 mm", outer diameter DS1 of power transmission shaft 55 = 44 mm inner diameter DS2 of power transmission shaft 55 = 28 mm depth of bolt hole 65 (female thread) HB = "9 mm≥2×DB", thickness TF of flange portion 57 = "7mm",
outer diameter DF of flange portion 57 = "65mm",
Bolt diameter DB of bolt 81 = "M4",
Length LB of bolt 81 (shaft portion 83) = "16 mm",
Material properties of power transmission shaft 55 = "aluminum alloy",
material properties of flange portion 57 = "aluminum alloy
material properties of bolt 81 = "structural steel.

The analysis results of the "base model" are shown in solid lines.

The analysis results of the "Female thread 3d model" with bolt hole 65 (female thread) depth HB = "12 mm = 3 x DB" from the base model are shown by the double-dashed lines/

The analysis results of the "female screw 3d + bolt 3d model" in which the depth of bolt hole 65 (female screw) HB = "14 mm ≥ 3 × DB" and the length of bolt 81 (shaft portion 83) LB = "20 mm" from the base model are shown with dashed lines.

The "d" in the model names ("female screw 3d" and "bolt 3d") is a simplified representation of the bolt diameter DB. Bolt 3d" indicates that the length of the portion of the bolt shaft 83 (threaded portion) that engages bolt hole 65 (inserted portion) is equivalent to three times the bolt diameter DM. The "Female thread 3d" indicates that the depth of bolt hole 65 corresponds to three times the bolt diameter DM.

As can be seen from the analysis results of these models, in the vicinity of bolt 81, stress is nonlinear and divergent due to the bolt axial force and stress concentration at the corner. However, in the range excluding such a singular field (hereinafter referred to as "singular section"), the relationship between the distance from the reference end face (coordinate X) and the strength of strain is linear. In other words, the range from the tip of bolt 81 to about a little beyond the tip of bolt 81 is affected by affection occurred in the vicinity of the bolt 81, but, beyond that range, the influence due to the bolt 81 is almost dismissed and presents a linear range in which the relationship between the distance from the end face (coordinate X) and strength of the strain is linear.

In both the "base model" and the "female thread 3d model," the length BX of the portion where the bolt 81 engages the power transmission shaft 55 is 9 mm, and although there are some differences in the analysis results, in both cases, at the vicinity of the coordinate X = 78 mm, the singular range changes to the linear range. In contrast, in the "Female screw 3d + bolt 3d model," the length BX of the portion where the bolt 81 engages with the power transmission shaft 55 is 13 mm, and, around the coordinate X = 68 mm, the singular range changes to the linear range.

Since the power transmission shaft 55, etc. shown in the present embodiment corresponds to the "base model". Hence, based on the results of this analysis, the strain gages 41, 42 are placed at the position where the coordinate X = 70 mm to 75 mm. In other words, the strain gages 41 and 42 are arranged at positions which belong to a positional range of 25 mm to 30 mm measured from the end face on the side to the end part 63.

Alternatively, the strain gages 41, 42 may be arranged at positions where the coordinates X = 73 mm to 78 mm, in other words, 22 mm to 27 mm from the end face on the side to the end part 63. Furthermore, the STRAIN GAGES 41, 42 may be arranged at positions where the coordinates X = 60 mm to 65 mm, in other words, 35 mm to 40 mm from the end face on the side to the end part 63.

In the example shown in Fig. 7B, the analysis results of the "bolt M5 model" are provided by a single point line. In this "bolt M5 model", chanted from the factors of the base model are the depth of bolt hole 65 (female thread) HB = "11mm≥2×DB", the bolt diameter DB of the bolt 81 = "M5", and the length LB of the bolt 81 (shaft portion 83) = 18mm. The bolt pretension of the bolt 81 is also changed to 5900 N.

In the analysis results of the above "bolt M5 model," stresses are nonlinear and diverge in the vicinity of bolt 81 due to the bolt axial force and stress concentration at the corner. However, the relationship between the distance from the end face (coordinate X) and the strain strength is linear except for such a specific range. In the "base model" and "female thread 3d Model," there are some differences in the analysis results, but there is a change to the linear range around the coordinate X = 78 mm. In the "bolt M5 model," the length BX of the portion where the bolt 81 engages the power transmission shaft 55 is 11 mm, and the linear range starts from around the coordinate X = 72.5 mm.

For any model, the position which is away from the end face by a distance of about "2.5" times the length BX of the portion of the bolt 81 engaging the power transmission shaft 55, is the position where the strain is maximum or nearly maximum while maintaining the linearity described above.

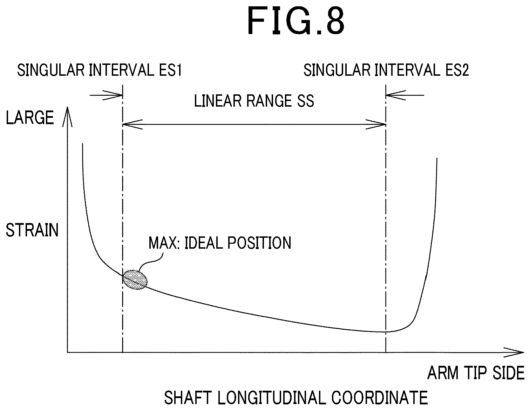

Since both axial ends of the actual power transmission shaft 55 are fixed by the bolts 81 and 85, the foregoing singular range occur at both ends thereof, respectively. The relationship between the coordinate X and strain is shown in Fig. 8 with the singular ranges occurring at both ends. As shown in the Fig. 8, this position-strain relationship is different, range by range, in the singular range ES1 on the side where the bolt 81 engages, the singular range ES2 on the side where the bolt 85 engages, and the linear range SS which is a range sandwiched between these singular intervals ES1 and ES2.

In the singular range ES1 and ES2, even a slight deviation in the arrangement position of the strain gages 41 and 42 can cause a large difference in the values. In particular, when the multiple strain gages 41, 42 are used together to identify the magnitude and direction of external forces, such differences can largely reduce the certainty of the detection results. In this respect, as shown in the present embodiment, if the strain gages 41, 42 are arranged in the linear range SS, the certainty of the detection result will not be significantly impaired even if minute deviations occur in those strain gages 41, 42. Therefore, the accuracy required for the installation of the strain gages 41, 42 on the power transmission shaft 55 will not be excessively high, and a decrease in work efficiency can be suitably avoided.

In addition, the train gages 41 and 42 can be placed in the linear range SS at the position that is deviated more to the end part 63 side. In this arrangement, the detected strain is also slightly larger than in the case where the strain gages 41 and 42 are placed at a position that is deviated more to end part 64. This is desirable to suppress the effects of noise and other factors to improve detection accuracy (to strengthen noise tolerance). In addition, in the above embodiment, the gages are placed at the position closest to the end part 63 in the linear range SS, i.e., the positions where the detected strain becomes the largest in the linear range SS. This can contribute to further improvement of detection accuracy (further enhancement of noise tolerance).

The power transmission shaft 55 is a component that should have a reasonable rigidity to support the configuration of the end effector side, and is not a component to generate a large amount of strain by intentionally lowering the rigidity like a distorting body, etc. In other words, even if the robot body 21 is pushed or pulled during the direct teaching and the external forces are transmitted to the power transmission shaft, the strain to be generated will be small. Therefore, as shown in the present embodiment, the strain gages 41 and 42 are attached to the power transmission shaft 55. This gives a better effect compared to the conventional configuration in which a force sensor equipped with a distorting body is attached to the end of the arm (see the force sensor 100 in Fig. 12A). In other words, the decrease in durability and allowable operating speed caused by the decrease in rigidity of robot body 21 can be suppressed. In addition, the decrease in payload due to the increase in the end effector weight can be suppressed (see Fig. 12B).

As shown in Fig. 12A, when the force sensor 100 is attached to the end effector and a part, which is closer to the base side than the force sensor 100 is, is pushed and pulled, it becomes difficult to identify the external forces. In other words, in order to successfully demonstrate the specified function by the force sensor 100, anything other than the end effector 29 or the handle attached to the force sensor 100 (not shown) becomes inappropriate as a grasping target, and the user's grasping position becomes highly restricted. In this respect, according to the configuration in which the strain gages 41 and 42 are attached to power transmission shaft 55 as shown in the present embodiment, the external forces can be identified at a position which is far from the end effector of robot body 21. Therefore, it can contribute to the relaxation of restrictions related to the user's grasping position.

As mentioned above, the strain generated in the power transmission shaft 55 is minute. Therefore, if a single strain gage is used to detect such a strain, it is likely to be affected by noise, etc., and the accuracy of the external force identification may be reduced. If the accuracy is lowered, it will be difficult to provide assistance in a timely manner, for example, due to a large dead zone. In particular, the initial movement of the assist may be delayed, and the assist function may not be properly demonstrated. In this respect, in the configuration shown in the present embodiment, the arrangement of multiple strain gages 41, 42 suppresses the decline in accuracy. Even if multiple strain gages 41, 42 are used together, the power transmission shaft 55 has a certain size. Therefore, it is desirable to increase the number of strain gages 41, 42 to reduce the accuracy degradation.

For the above reasons, the configuration shown in the present embodiment can contribute to improving the assist function during the direct teaching while minimizing the degradation of the basic capabilities of the robot 15.

The fixed portion of the power transmission shaft 55 and its vicinity are susceptible to stress concentration. In other words, even a slight difference in the arrangement of the strain gages 41 and 42 causes a large and nonlinear variation in the strain. Therefore, it is difficult to accurately identify the magnitude and direction of external forces from the strain detection results. In particular, such concerns become more pronounced when the multiple strain gages 41 and 42 are used together. On the other hand, by moving away from the fixed portion to some extent, the relationship between the distance extending from the fixed portion and the size of the strain becomes linear and the degree of variation becomes small. Hence, as shown in the present embodiment, it is technically meaningful to place the strain gages 41 and 42 which are positionally away from the vicinity of the fixed portion.

The strain on the power transmission shaft 55 is larger at positions closer to the base side than the end effector is. While avoiding singular fields due to stress concentration, etc., the strain gages 41 and 42 are positioned in such a way as to be shifted toward the fixed portion fixed to the speed reducer 37 on the power transmission shaft 55. This makes it possible to achieve a configuration that can detect as large a strain as possible.

As shown in the present embodiment, the strain gages 41, 42 are arranged so that they are aligned in the direction of rotation of the power transmission shaft 55. Hence, it is easy to arrange all the strain gages 41, 42 to one end of the power transmission shaft 55 while avoiding the singular fields due to stress concentration, etc. which are described. As mentioned above, this arrangement is very effective in making it possible to detect as large a strain as possible.

The configuration for detecting minute strain is susceptible to noise and other factors. Wiring for the drive unit (especially power lines) placed near the strain gages 41 and 42 can be a source of noise generation. In this respect, as shown in the present embodiment, the power transmission shaft 55 is made into a hollow type shaft, and the wiring for the train gages 41 and 42 and the wiring for the drive unit are arranged separately inside and outside of the hollow shaft. This can suitably eliminate the above concerns. It is noted that there is a certain amount of allowance for the wiring so that it does not interfere with the movement of the robot 15. Contact of the wiring with the strain gages 41, 42 during the movement of the robot 15 can be a cause of failure, etc. of the strain gages 41, 42. In order to avoid the occurrence of such an inconvenience, it is preferable to use the thickness part of the power transmission shaft as a partition.

When comparing the inner surface 62 of the power transmission shaft 55 with the outer surface 61 thereof, the area of the outer surface 61 is larger than that of the inner surface 62. In order to increase the number of strain gages 41, 42 to be installed, it is advantageous to use the outer surface 61 as the target for the installation of the strain gages 41, 42.

In order to suppress the peeling of the strain gage from the power transmission shaft, it is desirable to make the mounting portion as flat as possible. If the cross-section of the power transmission shaft is circular, the larger the diameter of the shaft, the flatter the mounting area will be to some extent. However, it is concerned that any restrictions on the diameter of the power transmission shaft for mounting the strain gage will hinder the downsizing and weight reduction of the robot. In this respect, at least a part of the outer surface 61 of the power transmission shaft 55 of the present embodiment is formed in a polygonal shape with a plurality of plane areas 61a - 61h lined up in the direction of rotation of the power transmission shaft 55. If the power transmission shaft 55 is configured to have the strain gages 41, 42 installed on these plane areas 61a - 61h, the size of the power transmission shaft 55 can be suppressed even when the power transmission shaft 55 is used as the target for the attachment of the strain gages 41, 42.

In order to improve the detection accuracy of strain, it is desirable to increase the rigidity of the strain-sensitive portion of the strain gage. However, the higher the rigidity of the strain-sensitive area, the lower the adherence to the mounting surface, and the higher the possibility of peeling due to repeated occurrence of strain. In consideration of this situation, it is preferable to form the cross-section as shown in the present embodiment so that it is polygonal in shape.

During the direct teaching, the user directly touches the robot body 21. Hence, it is desirable to suppress erroneous detection by covering the strain gages 41, 42 with the covers 52, 53 to prevent direct touch. If the strain gages 41, 42 are exposed on the surface, they may interfere with user's gripping operations. In this respect, as shown in the present embodiment, if the cover 52, 53 covers the strain gages 41, 42, the restrictions on the grasping position of the user can be relaxed.

### <Second embodiment>

A second embodiment will now be described.

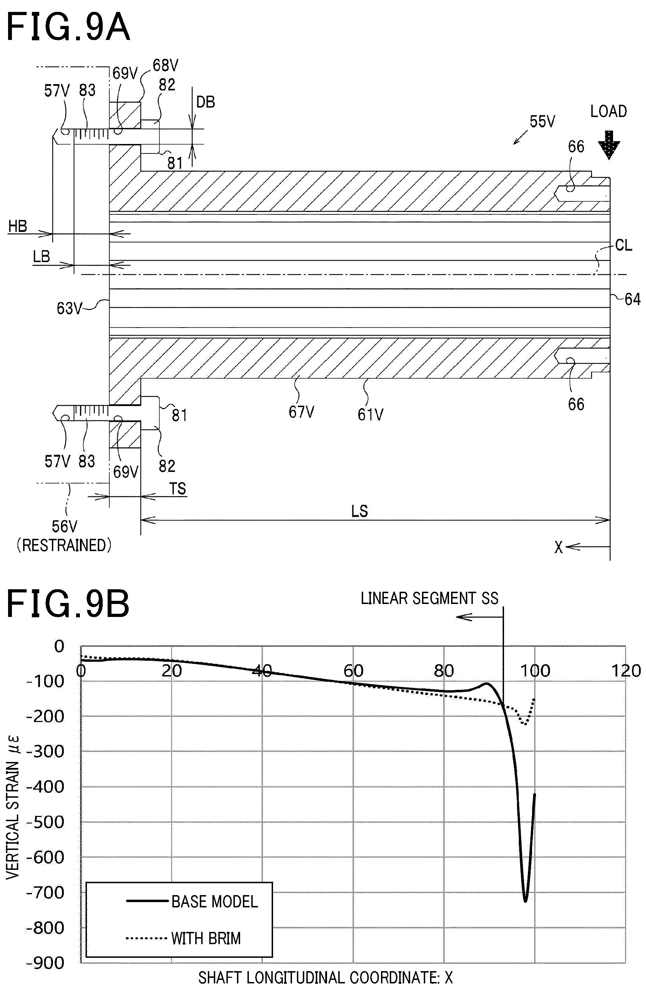

In the first embodiment described before, the power transmission shaft 55 is provided with the bolt holes 65, 66 that engage with the shaft portions 83, 87 of the bolts 81, 85. In the vicinity of the bolts 81 and 85 (especially at the shaft portions 83 and 87), there are stronger constraints on the arrangement of the strain gages 41 and 42 due to axial forces and other effects. One of the features of the present second embodiment is that it is designed to further improve the degree of freedom in the placement of the strain gages 41, 42. The characteristic configuration of the present second embodiment will be described below with reference to Fig. 9, focusing on the differences from the first embodiment. The explanation of the common configurations with the first embodiment is omitted for a simplified explanation.

As shown in Fig. 9A, a power transmission shaft 55V has an end part 63V, shown in the present embodiment, and the end part 63V has a flange portion 68V protruding radially from a cylindrical main body 61V. The flange portion 68V has a disc shape centered on the central axis line CL and is formed to have a constant thickness in the central axial direction CL. A plurality of through holes 69V through the flange portion 68V are formed in the thickness direction (i.e., in the central axis line CL direction). The shaft portion 83 of the bolt 81 is inserted through these through holes 69V from the end effector side of the arm 31. A shaft portion 83 inserted into each of the through holes 69V is engaged with the bolt hole 57V formed in an attachment 56V. In other words, the installation direction of the bolt 81 is reversed from that explained in the first embodiment, and a target of the bolt hole for the bolt 81 is also changed from the power transmission shaft 55V to the attachment 56V.

A numerical analysis was performed for this configuration under the same conditions as those in the first embodiment. Specifically, a bolt pretension (specifically 2750 N) was applied to the engagement portion (fastening portion) of each of the bolts 81. In conducting this analysis, the attachment 56V was restrained (fixed in the space) and a pressing force (specifically 1000 N) was applied to the end part 64 in the direction orthogonal to the central axis line CL. Furthermore, an analysis was conducted to determine what value of strain (vertical strain) would be generated at each part viewed in the coordinates X whose origin placed at the side face of the free end. The value of bolt pretension loaded on one engagement portion was reduced to account for the fact that the number of bolt fixing points were changed from "8" to "12" which has been adapted in the first embodiment.

In addition, the model in the present embodiment (hereinafter referred to as the "flanged model") is:
total length LS of the power transmission shaft 55 = 100 mm,
outer diameter DS1 of power transmission shaft 55 = 44 mm,
inner diameter DS2 of power transmission shaft 55 = 28 mm,
depth HB of bolt hole 65 (female thread) = "9mm≥2×DB",
thickness TF of flange portion 57 = 7 mm,
outer diameter DF of flange portion 57 = 65 mm,
bolt diameter DB of bolt 81 = M4,
length LB of bolt 81 (shaft portion 83) = 16 mm,
material properties of power transmission shaft 55 = aluminum alloy,
material properties of flange portion 57 = aluminum alloy, and
material properties of bolt 81 = structural steel.

These dimensions and material compositions are similar or identical to those of the "base model" shown in the first implementation. In addition, the diameter of the through hole 69V for each bolt 81 is 3.5 mm.

In Fig. 9B, the analysis results of the "flanged model" in the present embodiment are shown as a dotted line, and the analysis results of the "base model" are shown as a solid line.

Comparing these analysis results, the "flanged model" has a smaller singular range than that of the "base model", i.e., the range where the axial force of each of the bolts 81, etc. has an influence. Specifically, the range shifts from the singular range to the linear range around the coordinate X = "93 mm". In other words, if the position is out of the main body 61V, or flange portion 68V of the power transmission shaft 55, the strain gages 41, 42 can be placed closely to the flange portion 68V. This makes it possible to detect the strain suitably.

### <Third embodiment>

A third embodiment will now be described.

In the first embodiment described, the power of the motor unit 35D located in the first upper arm member 25 is transmitted to the second upper arm member 26 using the power transmission shaft 55. In contrast, the present embodiment differs from the first embodiment in the arrangement of the motor unit 35D and its associated configuration (power transmission shaft, etc.).

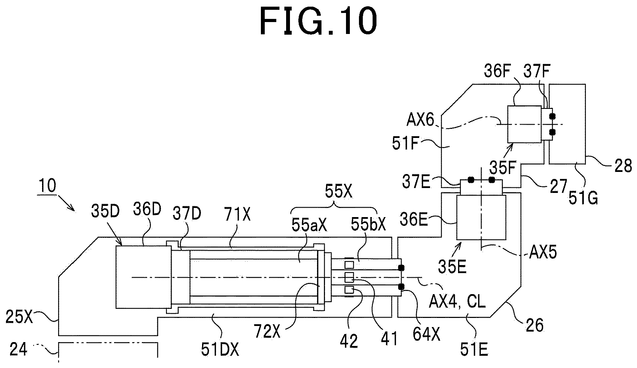

Referring to Fig. 10, the characteristic configuration of the present embodiment will be explained, focusing on differences from the first embodiment.

The motor unit 35D shown in the present embodiment is positioned at a position closer to the third joint in the first upper arm member 25X. Thus, the distance between the motor unit 35D and the fourth joint (serving as the second upper arm member 26) is larger than that explained in the first embodiment. By moving the heavier motor unit 35D closer to the third joint, the load on arm 31 can be reduced. This is desirable for increasing the payload capacity of the robot 15 and improving the responsiveness during operation.

In order to realize the arrangement of the motor unit 35D as described above, the power transmission shaft 55X shown in the present embodiment has a longer overall length than the power transmission shaft 55 shown in the first embodiment. The power transmission shaft 55X has a longer overall length than the power transmission shaft 55 shown in the first embodiment. In the power transmission shaft 55X, the first shaft 55aX fixed to the motor unit 35D (speed reducer 37D) via attachments and the second shaft 55bX fixed to the housing 51E of the second upper arm member 26 are connected in series to each other. These first shaft 55aX and second shaft 55bX rotate as one component when the servo motor 36D is operated.

The first shaft 55a is cylindrically formed about the central axis line CL. A cross roller 72X, which is a bearing for the first shaft 55aX, is located near the connection portion provided between the first shaft 55a and the second shaft 55bX. The cross roller 72X is supported by a high rigidity frame 71X fixed to the motor unit 35D via attachments. The cross roller 72X regulates deformation of the first shaft 55aX in the direction intersecting the central axis line CL.

The second shaft 55bX is shorter in length than the first shaft 55aX. This second shaft 55bX is not equipped with bearings. The outer surface of the second shaft 55bX is formed so that the cross section orthogonal to the central axis line CL is a regular polygon, similarly to the power transmission shaft 55 shown in the first present embodiment. This second shaft 55bX (in detail, the outer surface) is an object to which the strain gages 41, 42 are attached.

As described, the deformation of the power transmission shaft 55X is regulated by the cross roller 72X located near the connection portion of the first shaft 55aX and the second shaft 55bX. Therefore, when the user pushes or pulls the flange portion 28 or the wrist portion 27 of arm 31 during the direct teaching, the strain increases in the vicinity of the cross roller 72X. In other words, the relationship between the distance along the central axis line CL and the vertical strain changes significantly near the cross roller 72X, and the correlation between the two becomes nonlinear (singular field or singular range). Therefore, the strain gages 41 and 42 are positioned more toward the restricted range by the cross roller 72X than the fixed portion with the second upper arm member 26 is.

In addition, the strain gages 41,42 are positioned at a certain distance from the restricted range by the cross roller 72X so that they are out of the singular range. In other words, as described in the first embodiment, the strain gages 41, 42 are positioned as close as possible to the cross roller 72X in the range where the correlation between the distance and the vertical strain is linear.

When the first shaft 55aX and the second shaft 55bX are integrated by bolts, it is necessary to choose whether the bolts are to be attached from the side of the first shaft 55aX or the side of the second shaft 55bX. Depending on the choice, the ideal arrangement of the strain gages 41, 42 can be assumed to change. In the case of the structure where the bolt is attached from the side of the first shaft 55aX, a bolt hole is formed in the second shaft 55bX. When the bolt is installed from the side of the second shaft 55bX, the bolt hole is formed on the first shaft 55aX. Therefore, when the bolts are used for integration, it is preferable to determine the arrangement of the strain gages 41, 42 according to the bolt attachment structure.

### <Other embodiments>

Features according to the present invention are not limited to the description of each present embodiment, it may be implemented as follows, by way of example. Incidentally, each of the following configurations may be applied to each of the foregoing embodiments, or may be applied to each of the foregoing embodiments in part or in whole in combination.

In each of the foregoing embodiments, the strain gages 41 and 42 are placed at a position closer to the base side of arm 31 in the linear range SS where the strain is linearly changed, which is caused in the power transmission shaft 55. The linear range SS is set to exclude the singular ranges ES1 and ES2. The placement positions of the strain gages 41 and 42 may be arbitrarily changed within the linear range SS.

For example, it is possible to place the strain gages 41, 42 in the center of the linear range SS, or to place the gages 41, 42 at a potion sided to the end effector of the arm 31 in the linear range SS.

However, as mentioned above, the power transmission shaft 55 is a component that supports the arm configuring members (the second upper arm member 26, wrist portion 27, and flange portion 28) on the end effector side and the rigidity of the shaft is high. In other words, the strain generated in the power transmission shaft 55 is originally minute.

In light of these circumstances, it is desirable to place the strain gages 41 and 42 on the side where the strain is larger in the linear range SS, i.e., the base side of arm 31 in the linear range SS, in order to improve the detection accuracy using the strain gages 41 and 42. It is more desirable to place the strain gages 41 and 42 at the position where the strain is maximumly caused in the linear range SS.

In the foregoing embodiments, there has been exemplified the structure in which strain gages 41 and 42 are attached to the power transmission shaft 55 installed to the first upper arm member 25. Instead of this structure, for example, the power transmission shaft may be installed in another arm configuring member such as the second upper arm member 26 or wrist portion 27. In such cases, it is also possible to install the strain gages 41, 42 on the power transmission shaft.

However, as shown in each of the foregoing embodiments, the overall length of the second upper arm member 26 and the overall length of the wrist portion 27 may both be shorter than the overall length of the first upper arm member 25. In such a configuration, the benefit of using the power transmission shaft, i.e., the benefit of performance enhancement gained by shifting the installment position of the heavy motor unit toward the base of arm 31, is reduced.

In addition, if the power transmission shaft is shorter, the strain generated in the power transmission shaft also becomes smaller, thus making strain detection difficult. On the other hand, the lower arm member 24 has a longer overall length, so the benefit of using the power transmission shaft is greater. However, since the third axis AX3 and the longitudinal direction of the lower arm member 24 intersect each other, it is difficult to make the length of the power transmission shaft longer. On the other hand, when the first to third joints are used for operation, the user will be aware of feeling on the inverse kinematics, which will reduce the operability.

In view of these situations, it is important to provide the structure in which the power transmission shaft arranged to the first upper arm member 25 is assigned to an object on which the strain gages 41 and 42 are attached.

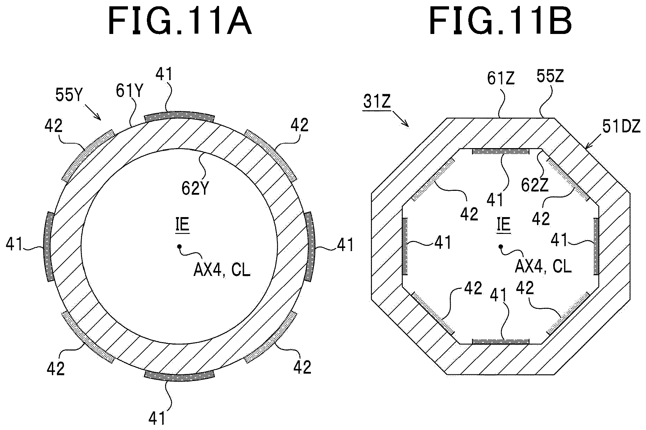

In each of the foregoing embodiments, the cross section (i.e., the cross section orthogonal to the central axis line CL) of the outer surface 61 of the power transmission shaft 55, to which the strain gages 41 and 42 are attached, is formed to be octagonal, but this is not limited to this shape. For example, it may be formed so that the cross section becomes other polygons such as quadrilaterals or pentagons (preferably regular polygons). It may also be formed so that the cross section orthogonal to the central axis line CL, in detail, the cross section of the outer surface 61Y, is circular, as shown in the power transmission shaft 55Y depicted in Fig. 11A. Although it is preferable for the power transmission shaft 55 to be hollow, this does not negate the need for it to be solid.

In the foregoing embodiments, the signal lines for the rotary encoders 38 and the power lines for the servo motors 36 are placed inside the power transmission shaft 55 (i.e., in the inner space IE of the shaft 55). On the other hand, the strain gages 41 and 42 are placed on the outside (i.e., the outer surface 61) of the power transmission shaft 55. In other words, the layout space is divided between the lines and the gages, but this is not limited to this configuration. It is also possible to have a configuration in which the placement space for those lines and the placement space for the strain gages 41, 42 are not divided, that is, those lines and strain gages 41, 42 can be placed together outside or inside the power transmission shaft 55.

In the foregoing embodiments, the tension/compression strain gage 41 and shear strain gage 42 are placed at the same location in the direction of the central axis line CL (i.e., the longitudinal direction of the arm 31). However, instead of this placement, it is possible to shift the location of the tension/compression strain gage 41 and the location of the shear strain gage 42 from each other in th direction of the central axis line CL.

In general, the size of the robot decreases, the diameter of the power transmission shaft also decreases. For such small robots, it is often difficult to arrange multiple strain gages in a circular arrangement. Hence, in this variation, the tension/compression strain gage 41 and shear strain gage 42 can be arranged by shifting each other in the direction of the central axis line CL. This can suitably avoid the situation where the presence of the force sensor 39 becomes an obstacle to miniaturization of the robot.

In the foregoing embodiments, the force sensor 39 is composed of the four tension/compression strain gages 41 and four shear strain gages 42. This can also be modified, and the number of the strain gages 41 and 42 can be changed arbitrarily as long as the detection function is not compromised.

For example, both of the number of tension/compression strain gages 41 and the number of shear strain gages 42 can be three, or the number of tension/compression strain gages 41 can be three and the number of shear strain gages 42 can be two. However, it should be noted that the power transmission shaft 55 has a high rigidity and amounts of the possible caused strain are minute. Hence, it is technically significant to increase the number of strain gages 41 and 42 to some extent to take into account the effects of noise, etc., as explained in the foregoing embodiments.

In each of the foregoing embodiments, the force sensor 39 is used to provide an assist function during the teaching mode. Instead of this configuration or in addition to this configuration, the robot 15 can be configured to monitor the load (resistance) generated on the robot 15 using the force sensor 39 even during the automatic operation mode of the robot 15, and to stop (protective stop) or warn the robot 15 if a load exceeding the expected range is generated on the robot 15. In other words, the system may be configured to use the detection results by the force sensor 39 for purposes other than assisting the during direct teaching.

In the foregoing embodiments, the resistance switching buttons 32 and position acquiring buttons 33, which are operation buttons, are located on the flange portion 28 of the arm 31. In addition, the locations of the resistance switching buttons 32 and position acquiring buttons 33 may be arbitrarily changed. For example, such buttons 32 and 33 can be placed on wrist portion 27 or second upper arm member 26. Incidentally, for user's smooth operation of position acquisition and resistance switching during the direct teaching, it is advantageous for the user to manually grasp positions which are near the resistance switching buttons 32 and position acquiring buttons 33. Therefore, the resistance switching buttons 32 and position acquiring buttons 33 may be placed on the arm configuring member located at a position closer to the end of arm 31 than the first upper arm member 25 is. In this case, the user can be encouraged to manually grasp the vicinity of the resistance switching buttons 32 and position acquiring buttons 33, which is desirable for successfully performing the assist function.

In the foregoing embodiments, the power transmission shaft 55 housed in the outer cover 52, which constitutes the outer contour of robot 15 (arm 31), is the object to which the strain gages 41, 42 are attached. A robot of a different type than this robot 15, specifically a robot of the type shown in Fig. 11B, in which a housing 51DZ serves as a power transmission shaft 55Z constituting the outer contour of the robot (arm 31Z), may also be targeted for attachment of the gages. In other words, the power transmission shaft 55Z may be the target for the attachment of the strain gages 41, 42. In this case, in order to improve the manufacturing efficiency of the robot and to reduce errors during the installation work, it is preferable to install the strain gages 41, 42 on the outer surface 61Z of the power transmission shaft 55Z in the same manner as the foregoing embodiments. However, on the other hand, such an arrangement not only limits the points that the user can manually touch during the direct teaching, but also makes it easy for erroneous detection to occur if the user accidentally touches the strain gages 41, 42 or the wiring extending from the strain gages 41, 42. Therefore, when the power transmission shaft 55Z constitutes the outer shell of the arm 31Z, these concerns can be eliminated by using a configuration in which the strain gages 41, 42 are attached to the inner surface 62Z of the power transmission shaft 55Z.

In the foregoing embodiments, the strain gages 41 and 42 are attached to the outer surface 61 of the power transmission shaft 55. Alternatively, the structure may be to attach the strain gages 41, 42 to the inner surface 62 (see Fig. 4) of the power transmission shaft 55. Still alternatively, ones of the tension/compression strain gages 41 and the shear strain gages 42 can be mounted on the outer surface 61 of the power transmission shaft 55, and the other can be mounted on the inner surface 62 of the power transmission shaft 55.

In the foregoing embodiments, the wave gear system as a speed reducer 37 attached to the servo motor 36 is illustrated. The specific configuration of the speed reducer is arbitrary. For example, a planetary gear system combining an internal planetary gear system and a constant velocity inner teeth gear system or other gear systems can be applied. It is arbitrary which of the outer teeth gear and inner teeth gear constituting the wave gear system is to be fixed to the power transmission shaft 55. For example, the housing 51D of the first upper arm member 25 may be fixed to the inner teeth gear, while the power transmission shaft 55 may be fixed to the outer teeth gear.

In each of the foregoing embodiments, the magnitude and direction of the external force acting on the arm 31 are specified based on the detection signals from strain gages 41 and 42. However, the invention is not limited to this scheme. The configuration of identifying at least one of the magnitude and direction of the external force is not denied.

In each of the foregoing embodiments, information from the force sensor 39 is inputted to the robot controller 93 during the teaching mode, and the robot controller 93 identifies the magnitude and direction of the external force to determine the control mode of the servo motor 36. It is also possible to configure the high-order controller 92 to perform those functions.

The foregoing embodiments have exemplified the 6-axis articulated robot. In addition, it is also possible to apply the configuration of attaching the strain gages to the power transmission shaft, to other articulated robots with the 3, 4, 5, or 7 axis. It is also possible to apply this configuration to a horizontal articulated robot instead of the vertical articulated robot.

The foregoing embodiments are directed to explanations of the industrial robot used in the factory. The invention according to this disclosure can also be applied to other articulated robots equipped with power transmission shafts, specifically, articulated robots used in other fields such as food, service, and medical care.

### <For the group of inventions extracted from each of the foregoing embodiments>

The features of the inventions extracted from each of the above embodiments will be explained below, with effects, etc. indicated as necessary. For ease of understanding, the corresponding configurations among the respective embodiments will also be added in parentheses, as appropriate, but is not limited to the specific configuration shown in parentheses.

### Feature 1:

A first feature is related to an industrial robot (the robot 15) including an arm (the arm 31), a root body (robot body 21), and a monitoring unit (the force sensor 39 and robot control 93). The arm is formed by linking a plurality of arm configuring members (the first and second upper arm members 25, 26) in series. The robot body has a drive mechanism (the motor units 35 and power transmission shaft 55) drives joints (the first to sixth joins) of the arm. The monitoring unit monitors an external force applied to the robot body.
the plurality of arm configuring members include first and second arm configuring members (the first and second upper arm members 25, 26), the second arm configuring member being located closely to the end effector more than the first arm configuring member is,
the drive mechanisms include
a drive unit (the motor unit 35D) fixed to the first arm configuring member;
a power transmission shaft, the power transmission shaft composing part of a linkage member linking the first and second arm configuring members to each other and transmits power from the drive unit to the second arm configuring member; and
the monitoring unit includes
a plurality of strain gages (the strain gages 41, 42) installed on the power transmission shaft and configured to detect strain caused in the power transmission shaft, and
a determination unit (the robot controller 93, step S102) determining a magnitude and direction of the external force based on detection signals from the strain gages.

The power transmission shaft is a component that has a reasonable rigidity to support the configuration of the end effector side. The power transmission shaft is not a part to generate a large amount of strain by intentionally lowering the rigidity like a distorting body, etc. In other words, even if the robot body is pushed or pulled during direct teaching and the external force is transmitted to the power transmission shaft, the amount of strain generated will be very small.

In contrast, as explained in this feature, the configuration in which the strain gages are attached to the power transmission shaft reduces the rigidity of the robot body and increases the end effector weight, compared to the conventional configuration in which a force sensor with a distorting body is attached to the end of the arm. This is a new concept in industrial robotics, which is expected to reduce the moving velocity of industrial robots. This is desirable in terms of suppressing the decline in basic performance of industrial robots, such as movement speed and payload. The position of the drive unit, which weighs more, can be shifted to the base side of the arm by using the power transmission shaft. Therefore, it can be said that this can contribute to the enhancement of basic performance.

When a force sensor is attached to the end effector, it is difficult to identify an external force when the user pushes and pulls an arm position on the base side of the arm, which is farther away from the force sensor. In other words, in order to successfully demonstrate the specified functions by the force sensor, the user's grasping position becomes more restricted. In this regard, according to the method of attaching the strain gages on the power transmission shaft as explained in this feature, the external force can be identified at a position far from the end effector of the robot body, which contributes to alleviating the restrictions on the user's grasping position.

As mentioned above, the strain generated in the power transmission shaft is minute. Additionally, if such a minute strain is detected by a single strain gage, it is likely to be affected by noise, etc., and the accuracy of the external force identification may be reduced. If the accuracy becomes low, it will be difficult to provide assistance in a timely manner due to a large dead zone, etc. In particular, a delay in the initial movement of the assist and other factors that prevent the assist functions from being properly demonstrated can be a factor that reduces user satisfaction. In this regard, the configuration shown in this feature suppresses the decline in accuracy by using multiple strain gages. Even if the multiple strain gages are used together, a certain size can be expected for the power transmission shaft. Therefore, it is desirable to increase the number of strain gages to suppress the accuracy degradation.

For the above reasons, the configuration shown in this feature can contribute to improving the assist functions performed during direct teaching while minimizing the degradation of the basic performance of the industrial robot.

### Feature 2 (one of the main features):

A second feature is related to an industrial robot (the robot 15) including a root body (robot body 21) with an arm (the arm 31) and a drive mechanism (the motor units 35 and power transmission shaft 55), and a controller (the robot controller 93). The arm is formed by linking a plurality of arm configuring members (the first and second upper arm members 25, 26) in series. The drive mechanism drives joints (the first to sixth joins) of the arm. The controller controls motions of the robot body.

The plurality of arm configuring members include first and second arm configuring members, the second arm configuring member being located closely to the end effector more than the first arm configuring member is.

The drive mechanisms include
a drive unit (the motor unit 35D) fixed to the first arm configuring member;
a power transmission shaft (the power transmission shaft 55), the power transmission shaft being part of a linkage member linking the first and second arm configuring members to each other and transmits power from the drive unit to the second arm configuring member, and
a plurality of strain gages (the strain gages 41, 42) installed on the power transmission shaft and each configured to detect strain caused in the power transmission shaft.

The controller includes a determination unit (the robot controller 93, step S102), the determination unit determining a magnitude and a direction of an external force exerted onto the robot body based on detection signals outputted from the strain gauges, the controller being adapted to drive and control the drive unit based on determined results for the magnitude and direction of the external force.

The power transmission shaft is a component that has a reasonable rigidity to support the configuration of the end effector side. The power transmission shaft is not a part to generate a large amount of strain by intentionally lowering the rigidity like a distorting body, etc. In other words, even if the robot body is pushed or pulled during direct teaching and the external force is transmitted to the power transmission shaft, the amount of strain generated will be very small.

In contrast, as explained in this feature, the configuration in which the strain gages are attached to the power transmission shaft reduces the rigidity of the robot body and increases the end effector weight, compared to the conventional configuration in which a force sensor with a distorting body is attached to the end of the arm. This is a new concept in industrial robotics, which is expected to reduce the moving velocity of industrial robots. This is desirable in terms of suppressing the decline in basic performance of industrial robots, such as movement speed and payload. The position of the drive unit, which weighs more, can be shifted to the base side of the arm by using the power transmission shaft. Therefore, it can be said that this can contribute to the enhancement of basic performance.

When a force sensor is attached to the end effector, it is difficult to identify an external force when the user pushes and pulls an arm position on the base side of the arm, which is farther away from the force sensor. In other words, in order to successfully demonstrate the specified functions by the force sensor, the user's grasping position becomes more restricted. In this regard, according to the method of attaching the strain gages on the power transmission shaft as explained in this feature, the external force can be identified at a position far from the end effector of the robot body, which contributes to alleviating the restrictions on the user's grasping position.

As mentioned above, the strain generated in the power transmission shaft is minute. Additionally, if such a minute strain is detected by a single strain gage, it is likely to be affected by noise, etc., and the accuracy of the external force identification may be reduced. If the accuracy becomes low, it will be difficult to provide assistance in a timely manner due to a large dead zone, etc. In particular, a delay in the initial movement of the assist and other factors that prevent the assist functions from being properly demonstrated can be a factor that reduces user satisfaction. In this regard, the configuration shown in this feature suppresses the decline in accuracy by using multiple strain gages. Even if the multiple strain gages are used together, a certain size can be expected for the power transmission shaft. Therefore, it is desirable to increase the number of strain gages to suppress the accuracy degradation.

For the above reasons, the configuration shown in this feature can contribute to improving the assist functions performed during direct teaching while minimizing the degradation of the basic performance of the industrial robot.

### Feature 3 (another feature):

A third feature is related to an industrial robot (the robot 15) including a root body (robot body 21) with an arm (the arm 31) and a drive mechanism (the motor units 35 and power transmission shaft 55), and a controller (the robot controller 93). The arm is formed by linking a plurality of arm configuring members (the first and second upper arm members 25, 26) in series. The drive mechanism drives joints (the first to sixth joins) of the arm. The controller controls motions of the robot body.

The plurality of arm configuring members include first and second arm configuring members, the second arm configuring member being located closely to the end effector more than the first arm configuring member is.

The drive mechanisms include
a drive unit (the motor unit 35D) fixed to the first arm configuring member and configured to have an actuator (the servo motor 36D) and a speed reducer (the speed reducer 37D) attached to the actuator;
a power transmission shaft (the power transmission shaft 55), the power transmission shaft being fixed to the speed reducer and the second arm configuring member and, thus, being part of a linkage member linking the first and second arm configuring members to each other and transmits power from the drive unit to the second arm configuring member, and
a plurality of strain gages (strain gages 41, 42) installed on the power transmission shaft and each configured to detect strain caused in the power transmission shaft.

The controller includes a determination unit (the robot controller 93, step S102), the determination unit determining a magnitude and a direction of an external force applied to the robot body based on detection signals outputted from the strain gauges, the controller being adapted to drive and control the drive unit based on determined results for the magnitude and direction of the external force.

The power transmission shaft is a component that has a reasonable rigidity to support the configuration of the end effector side. The power transmission shaft is not a part to generate a large amount of strain by intentionally lowering the rigidity like a distorting body, etc. In other words, even if the robot body is pushed or pulled during direct teaching and the external force is transmitted to the power transmission shaft, the amount of strain generated will be very small.

In contrast, as explained in this feature, the configuration in which the strain gages are attached to the power transmission shaft reduces the rigidity of the robot body and increases the end effector weight, compared to the conventional configuration in which a force sensor with a distorting body is attached to the end of the arm. This is a new concept in industrial robotics, which is expected to reduce the moving velocity of industrial robots. This is desirable in terms of suppressing the decline in basic performance of industrial robots, such as movement speed and payload. The position of the drive unit, which weighs more, can be shifted to the base side of the arm by using the power transmission shaft. Therefore, it can be said that this can contribute to the enhancement of basic performance.

When a force sensor is attached to the end effector, it is difficult to identify an external force when the user pushes and pulls an arm position on the base side of the arm, which is farther away from the force sensor. In other words, in order to successfully demonstrate the specified functions by the force sensor, the user's grasping position becomes more restricted. In this regard, according to the method of attaching the strain gages on the power transmission shaft as explained in this feature, the external force can be identified at a position far from the end effector of the robot body, which contributes to alleviating the restrictions on the user's grasping position.

As mentioned above, the strain generated in the power transmission shaft is minute. Additionally, if such a minute strain is detected by a single strain gage, it is likely to be affected by noise, etc., and the accuracy of the external force identification may be reduced. If the accuracy becomes low, it will be difficult to provide assistance in a timely manner due to a large dead zone, etc. In particular, a delay in the initial movement of the assist and other factors that prevent the assist functions from being properly demonstrated can be a factor that reduces user satisfaction. In this regard, the configuration shown in this feature suppresses the decline in accuracy by using multiple strain gages. Even if the multiple strain gages are used together, a certain size can be expected for the power transmission shaft. Therefore, it is desirable to increase the number of strain gages to suppress the accuracy degradation.

For the above reasons, the configuration shown in this feature can contribute to improving the assist functions performed during direct teaching while minimizing the degradation of the basic performance of the industrial robot.

### Feature 4 (featuring rigidity):

A feature 4 is provided as the industrial robot according to feature 3, in which the power transmission shaft is higher in rigidity than the speed reducer.

Making the rigidity of the power transmission shaft higher than that of the speed reducer is effective in reducing the degradation of the robot's basic performances caused due to the strain of the power transmission shaft. In such a configuration, it is assumed that the strain of the power transmission shaft will be further reduced. However, such concerns can be suitably eliminated by using multiple strain gages together as shown in Feature 1 and other features.

The configuration shown in this feature, "the power transmission shaft has higher tortional rigidity than that of the speed reducer," may be implemented in the industrial robot described in Feature 3.

### Feature 5 (featuring arrangement avoiding fixed portions):

A fifth feature is that, in the industrial robot according to feature 3 or feature 4, the strain gages are arranged to be away from a vicinity of the fixed portion of the speed reducer on the power transmission shaft.

The fixed portion of the power transmission shaft and its vicinity are susceptible to stress concentration. In other words, even a slight difference in arrangement positions of the strain gages causes a large and nonlinear variations in the strain. Therefore, it is difficult to accurately identify the magnitude and direction of an external force from the strain detection results. In particular, as shown in the configuration of Feature 1, such concerns become more pronounced when multiple strain gages are used together. In contrast, by moving away from the fixed portion to some extent, the relationship between the distance from the fixed portion and the size of the strain becomes linear and the degree of variation becomes small. Therefore, as shown in the present feature, it is technically significant to place the fixed portion away from the vicinity of the fixed portion.

The term "away from the vicinity" referred to in this feature is intended to avoid the area affected by stress concentration and other undesirable factors. The forgoing range (singular field) can be confirmed, for example, by experiment or analysis.

### Feature 6:

A sixth feature is related to the stain gages according to any one of the features 3 to 5, in which the stain gases are arranged at a biased position on the power transmission shaft, the biased position being located in a range from a fixed portion of the speed reducer thereon to a fixed portion of the second arm configurating member thereon and being biased closer to the fixed portion of the speed reducer than the fixed portion of the second arm configuring member is.

In the power transmission shaft, the strain generated on the base side of the robot body is larger than the strain generated on the end effector side. While avoiding the singular field due to stress concentration, etc., as explained in Feature 5, the strain gages are positionally shifted to the fixed portion side of the speed reducer. As a result, this shifted positioning of the gages makes it possible to detect as large a strain as possible.

### Feature 7:

In a seventh feature which depends on any one of the features 1 to 6, the stain gages are arranged in line in a rotation direction of the power transmission shaft.

According to the configuration of arranging the strain gages in the direction of rotation as explained in this feature, it is easier to arrange all the strain gages toward one end of the power transmission shaft while avoiding the singular field due to stress concentration, etc. as described above. Hence, this arrangement has technical significance in making it possible to detect as large a strain as possible.

### Feature 8 (featuring use as partition):

In an eighth feature depending on any one of the features 1 to 7, the power transmission shaft is provided as a hollow shaft having inside and outside surfaces,
wherein wiring for a drive unit which is part of the drive mechanism is arranged on either one of the inside and outside surfaces of the power transmission shaft, while the strain gages are arranged on the other of the inside and outside surfaces of the power transmission shaft.

A configuration that detects minute strain is susceptible to noise and other factors. The wiring for the drive unit (especially the power line) is placed near the strain gages, which can be a source of noise generation. However, as explained in this feature, the above concerns can be suitably eliminated by forming the power transmission shaft into a hollow type shaft and separating wires to the train gages and the drive unit as inside and outside wiring of the hollow shaft. There is a certain amount of allowance for the wiring so that it does not interfere with the robot's movement. Contact of the wiring with the strain gages during robot operation may cause the strain gages to malfunction or other problems. To avoid such an inconvenience, it is preferable to use the power transmission shaft as a partition for the spaces provided inside and outside the hollow shaft.

### Feature 9 (gage and wiring installment):

In the industrial robots according to one of the features 1 to 8, the power transmission shaft is hollow, and the wiring for the drive unit equipped with the drive mechanism is located inside said power transmission, and the strain gages are disposed on the outer surface of the power transmission shaft.

According to the configuration shown in this feature, the following effects can be expected in addition to the effects shown in Feature 8. That is, when comparing the inner surface of the power transmission shaft with the outer surface, the outer surface has a larger area. In order to increase the number of strain gages to be installed, it is advantageous to use the outer surface as the target for installing the strain gage.

### Feature 10 (sectional shape)

In the industrial robots according to one of the features 1 to 8, the power transmission shaft is provided with a polygonal portion. This polygonal portion has a plurality of plane areas (the plane areas 61a - 61h) lined up in the direction of rotation of the power transmission shaft and whose cross section orthogonal to the rotation central axis line (i.e., the central axis line CL) is polygonal (for example, octagonal). The strain gages are arranged on those plane areas of the polygonal portion.

In order to suppress the peeling of the strain gage from the power transmission shaft, it is preferable to make the mounting portion as flat as possible. If the cross-section of the power transmission shaft is circular, the larger the diameter of the shaft, the flatter the mounting area becomes to some extent. However, it is concerned that any restriction on the diameter of the power transmission shaft in mounting the strain gage will hinder the downsizing and weight reduction of the robot. In this regard, as shown in the present feature, at least a part of the outer surface of the power transmission shaft can be formed into a polygonal shape with a plurality of plane areas in the direction of rotation of the power transmission shaft, and the train gage can be installed in these plane areas. This allows the size of the power transmission shaft to be prevented from being larger even when the power transmission shaft is used as the target for installing the strain gage thereon.

In order to improve the detection accuracy of strain, it is desirable to increase the rigidity of the strain-sensitive portion of the strain gage. However, if the rigidity of the strain-sensitive portion becomes higher, the adhesion to the mounting surface becomes lower, and the possibility of peeling due to repeated occurrence of strain also increases. In consideration of this situation, it is preferable to form the cross section, as shown in this feature, into a polygonal cross section.

### Feature 11 (cover)

In the industrial robots according to one of the features 1 to 10, the first arm configuring member is provided with a cover (i.e., the covers 52, 53) that faces the outer surface of the power transmission shaft with a gap and covers the power transmission shaft. In this configuration, the strain gages are located in the gap.

During the direct teaching, the user manually touches the robot body directly. Thus, it is desirable to suppress erroneous detection by covering the strain gages with the covers to prevent the direct touch to the gages. Also, if the strain gages are exposed on the surface, they may interfere with user's grasping actions. In this regard, as shown in the present feature, if the covers cover the strain gages, the restriction on the user's grasping positions can be alleviated.

### Feature 12 (positional relationship with buttons):

In the industrial robots according to one of the features 1 to 11, among the plurality of arm configuring members, there is a predetermined arm configuring member located at a position closer to the end effector, in the robot body, than the first arm configuring member is. Operation buttons (such as resistance switching buttons 32 and position acquiring buttons 33) are provided on this predetermined arm configuring member. These operation buttons are manually operated by the user during the direct teaching in order to teach the operating positions together with direct manual moving of the robot body.

This feature allows operation buttons to be provided on the predetermined arm configuring member located closer to the end effector than the first arm configuring member is. As a result, the user's manual grasping position can be guided to a position preferable for identifying the external force.

It is also possible to specify the second arm configuring member as the predetermined arm configuring member in this feature.

### Feature 13 (restriction member and gage position):

In the industrial robots according to one of the features 1 to 12, there is additionally provide a restriction member (practically, the cross roller 72X) is provided in the first arm configuration and restricts deformation of the power transmission shaft in a direction orthogonal to the rotational central axis line (i.e., the central axis line CL) by contacting a middle portion of the power transmission shaft. In this configuration, the strain gages are located on the power transmission shaft between the fixed portion to the second arm configuring member and the portion where the deformation is restricted by the restriction member.

A longer power transmission shaft is desirable to facilitate strain detection by the strain sensor and to reduce the load during robot operations by moving the drive unit to the base side. However, if the power transmission shaft is excessively long, there is a concern that motions of the robot, which are commanded from the robot controller for an intended purpose designated to the robot system, may be adversely affected. With consideration of such an affect, the restriction member is used as shown in the present feature, thereby suppressing excessive deformation of the power transmission shaft. In such a configuration, by placing the strain gage in the restricted area described, the restriction function by the restriction member and the detection function by the strain gage can be suitably coexisted.

### Feature 14 (shift towards restricted range):

In the industrial robots according to feature 13, the strain gages are located on the power transmission shaft between the fixed portion to the second arm configuring member and the portion where the deformation is restricted by the restriction member, in which the strain gauges are shifted towards the restricted range.

As shown in the present feature, the configuration in which the deformation of the power transmission shaft is restricted by the restriction member is favorable for lengthening the power transmission shaft and for improving the degree of freedom in the arrangement of the drive unit. However, the shaft is susceptible to stress concentration not only in the vicinity of the fixed portion to the second arm configuring member, but also in the vicinity of the restricted range where deformation is restricted by the restriction member.

When being away from the fixed portion and the restricted range by a certain distance, the relationship between the distance and the size of the strain becomes linear, and the degree of variation becomes smaller. More precisely, the strain itself is larger at positions closer to the restricted member than that caused at positions closer to the fixed portion. Therefore, as shown in this feature, a practically preferable configuration can be realized by placing the strain gage in the restricted portion that is biased toward the restricted range.

### Feature 15 (for direct teaching):

In the industrial robots according to one of the features 1 to 14, the control mode in the controller includes a direct teaching mode for direct teaching in which the user directly moves the industrial robot to teach its operating positions, and an automatic operation mode in which the robot body is operated according to the teaching in the direct teaching mode. The controller is configured not to perform at least any of the foregoing identification determined by the determination unit and the control performed by the control unit, during the automatic operation mode.

In assisting the direct teaching being performed, the robot is expected to actively move in accordance with the directions and magnitudes of the external forces, thereby reducing the burden on the user. However, if such a function is exercised during the automatic operation mode, the function not only interferes with proper operation, but may also increase events of unintentional collisions with surrounding equipment or objects due to unexpected movements. Hence, a practically preferable configuration can be achieved by configuring the system not to identify external forces or perform drive control based on the foregoing determination and control during the automatic operation mode.

### [Brief Description of Partial Reference Signs List]

10...robot system,
15...robot serving as industrial robot
21...robot body,
25...first upper arm member,
26...second upper arm member,
31...arm
35...motor unit,
36...servo motor,
39...force sensor,
41...tension/compression strain gage,
42...shear strain gage,
51... housing,
55...power transmission shaft
,56...attachment,
61...outer surface,
61a to 61h...plane area,
63,64...end part,
65,66...bolt hole,
81,85...bolt,
83,87...shaft portion,
92...high-order controller,
93...robot controller,
95...drive control unit,
AX4...fourth axis,
CL...central axis line,
IE...inner space,
SS...linear range_{∘}

## Claims

1. An industrial robot (15) comprising:
a robot body (21) provided with an arm (31) formed with a plurality of arm configuring members (25, 26) linked in series via joints (JT) and drive mechanisms (35, 36) configured to drive the joints (JT) and an end effector (29) located at a tip end of the arm (31); and
a controller (93) configured to control motions of the robot body (21), wherein
the plurality of arm configuring members (25, 26) include first and second arm configuring members (25, 26), the second arm configuring member (26) being located closely to the end effector (29) more than the first arm configuring member (25) is;
the drive mechanisms (35, 36) include
a drive unit (35D) fixed to the first arm configuring member (25) and configured to have an actuator (36D) and a speed reducer (37D) attached to the actuator (36D);
wherein the drive mechanisms (35, 36) are **characterized by**
a power transmission shaft (55, 55Y 55Z), the power transmission shaft (55, 55Y, 55Z) being fixed to the speed reducer (37D) and the second arm configuring member (26) such that the power transmission shaft (55, 55Y, 55Z) composes part of a linkage member linking the first and second arm configuring members (25, 26) to each other and configured to transmit power from the drive unit (35D) to the second arm configuring member (26); and
a plurality of strain gages (41, 42) installed on the power transmission shaft (55, 55Y, 55Z) and each configured to detect strain caused in the power transmission shaft (55, 55Y, 55Z), wherein the plurality of strain gages (41, 42) are either attached to an outer surface (61) of the power transmission shaft (55, 55Y), which is solid or hollow, or to the inner surface (62Z) of the power transmission shaft (55Z), which is hollow, or ones of the tension/compression strain gages (41) and the shear strain gages (42) are mounted on the outer surface (61) of the power transmission shaft (55, 55Y, 55Z), which is hollow, and the other are mounted on the inner surface (62) of the power transmission shaft (55, 55Y, 55Z), which is hollow, and
the controller (93) includes a determination unit (S102), the determination unit (S102) being configured to determine a magnitude and a direction of an external force exerted onto the robot body (21), based on detection signals outputted from the strain gauges (41, 42), the controller (93) being configured to drive and control the drive unit (35D) based on determined results for the magnitude and direction of the external force.

2. The industrial robot (15) according to claim 1, wherein the strain gages (41, 42) are arranged at a biased position on the power transmission shaft (55, 55Y, 55Z), the biased position being located in a range from a fixed portion of the speed reducer (37D) thereon to a fixed portion of the second arm configuring member (26) thereon and being biased closer to the fixed portion of the speed reducer (37D) than the fixed portion of the second arm configuring member (26) is so that the strain gages (41, 42) are positionally shifted to the fixed portion side of the speed reducer (37D).

3. The industrial robot (15) according to claim 2, wherein the strain gages (41, 42) are arranged to be away from a vicinity of the fixed portion of the speed reducer (37D) on the power transmission shaft (55, 55Y, 55Z).

4. The industrial robot (15) according to any one of claims 1 to 3, wherein
the power transmission shaft (55, 55Y, 55Z) is provided as a hollow shaft having inside and outside surfaces (61, 62; 61Y, 62; 61Z, 62Z),
wherein wiring for a drive unit (35D) which is part of the drive mechanism (35, 36) is arranged on either one of the inside and outside surfaces (61, 62; 61Y, 62; 61Z, 62Z) of the power transmission shaft (55, 55Y, 55Z), while the strain gages (41, 42) are arranged on the other of the inside and outside surfaces (61, 62; 61Y, 62; 61Z, 62Z) of the power transmission shaft (55, 55Y, 55Z).

## Patentansprüche

1. Industrieroboter (15), der aufweist:
einen Roboterkörper (21), der mit einem Arm (31), der mit einer Vielzahl von Arm-konfigurierenden Gliedern (25, 26) ausgebildet ist, die über Gelenke (JT) und Antriebsmechanismen (35, 36), die konfiguriert sind, um die Gelenke (JT) anzutreiben, in Reihe verbunden sind, und einem Endeffektor (29), der sich an einem Spitzenende des Arms (31) befindet, bereitgestellt ist; und
eine Steuerungseinrichtung (93), die konfiguriert ist, um Bewegungen des Roboterkörpers (21) zu steuern, wobei
die Vielzahl von Arm-konfigurierenden Gliedern (25, 26) erste und zweite Arm-konfigurierende Glieder (25, 26) enthalten, wobei sich das zweite Arm-konfigurierende Glied (26) näher an dem Endeffektor (29) befindet als das erste Arm-konfigurierende Glied (25);
die Antriebsmechanismen (35, 36) enthalten
eine Antriebseinheit (35D), die an dem ersten Arm-konfigurierenden Glied (25) befestigt ist und konfiguriert ist, um einen Aktuator (36D) und einen Drehzahlminderer (37D), der an dem Aktuator (36D) angebracht ist, zu haben;
wobei die Antriebsmechanismen (35, 36) **gekennzeichnet sind durch**
eine Kraftübertragungswelle (55, 55Y, 55Z), wobei die Kraftübertragungswelle (55, 55Y, 55Z) an dem Drehzahlminderer (37D) und dem zweiten Arm-konfigurierenden Glied (26) derart befestigt ist, dass die Kraftübertragungswelle (55, 55Y, 55Z) einen Teil eines Verbindungsglieds bildet, das die ersten und zweiten Arm-konfigurierenden Glieder (25, 26) miteinander verbindet und konfiguriert ist, um Kraft von der Antriebseinheit (35D) zu dem zweiten Arm-konfigurierenden Glied (26) zu übertragen; und
eine Vielzahl von Dehnungsmessstreifen (41, 42), die an der Kraftübertragungswelle (55, 55Y, 55Z) installiert sind und jeweils konfiguriert sind, um eine Belastung, die in der Kraftübertragungswelle (55, 55Y, 55Z) verursacht wird, zu erfassen, wobei die Vielzahl von Dehnungsmessstreifen (41, 42) entweder an einer äußeren Fläche (61) der Kraftübertragungswelle (55, 55Y), die massiv oder hohl ist, oder an der inneren Fläche (62Z) der Kraftübertragungswelle (55Z), die hohl ist, angebracht ist oder einer der Zug-/Druck-Dehnungsmessstreifen (41) und der Scherdehnungsmessstreifen (42) an der äußeren Fläche (61) der Kraftübertragungswelle (55, 55Y, 55Z), die hohl ist, angebracht ist und der andere an der inneren Fläche (62) der Kraftübertragungswelle (55, 55Y, 55Z), die hohl ist, angebracht ist, und
die Steuerungseinrichtung (93) eine Bestimmungseinheit (S102) enthält, wobei die Bestimmungseinheit (S102) konfiguriert ist, um eine Größe und eine Richtung einer externen Kraft, die auf den Roboterkörper (21) ausgeübt wird, basierend auf Erfassungssignalen, die von den Dehnungsmessstreifen (41, 42) ausgegeben werden, zu bestimmen, wobei die Steuerungseinrichtung (93) konfiguriert ist, um die Antriebseinheit (35D) basierend auf bestimmten Ergebnissen für die Größe und Richtung der externen Kraft anzutreiben und zu steuern.

2. Industrieroboter (15) nach Anspruch 1, wobei
die Dehnungsmessstreifen (41, 42) an einer vorgespannten Position auf der Kraftübertragungswelle (55, 55Y, 55Z) angeordnet sind, wobei sich die vorgespannte Position in einem Bereich von einem befestigten Abschnitt des Drehzahlminderers (37D) auf dieser zu einem befestigten Abschnitt des zweiten Arm-konfigurierenden Glieds (26) auf dieser befindet und näher an dem befestigten Abschnitt des Drehzahlminderers (37D) als dem befestigten Abschnitt des zweiten Arm-konfigurierenden Glieds (26) vorgespannt ist, so dass die Dehnungsmessstreifen (41, 42) zu der Seite des befestigten Abschnitts des Drehzahlminderers (37D) positionsverschoben sind.

3. Industrieroboter (15) nach Anspruch 2, wobei
die Dehnungsmessstreifen (41, 42) angeordnet sind, um von einer Nähe des befestigten Abschnitts des Drehzahlminderers (37D) auf der Kraftübertragungswelle (55, 55Y, 55Z) entfernt zu sein.

4. Industrieroboter (15) nach einem der Ansprüche 1 bis 3, wobei
die Kraftübertragungswelle (55, 55Y, 55Z) als eine hohle Welle mit inneren und äußeren Flächen (61, 62; 61Y, 62; 61Z, 62Z) bereitgestellt ist,
wobei eine Leitung für eine Antriebseinheit (35D), die ein Teil des Antriebsmechanismus (35, 36) ist, auf einer der inneren und äußeren Flächen (61, 62; 61Y, 62; 61Z, 62Z) der Kraftübertragungswelle (55, 55Y, 55Z) angeordnet ist, während die Dehnungsmessstreifen (41, 42) auf der anderen der inneren und äußeren Flächen (61, 62; 61Y, 62; 61Z, 62Z) der Kraftübertragungswelle (55, 55Y, 55Z) angeordnet sind.

## Revendications

1. Robot industriel (15) comprenant :
un corps de robot (21) pourvu d'un bras (31) formé d'une pluralité d'éléments constitutifs de bras (25, 26) reliés en série par des articulations (JT) et des mécanismes d'entraînement (35, 36) configurés pour actionner les articulations (JT) et un effecteur d'extrémité (29) situé à une extrémité terminale du bras (31) ; et
un dispositif de commande (93) configuré pour commander les mouvements du corps de robot (21), dans lequel
la pluralité d'éléments constitutifs de bras (25, 26) inclut des premier et second éléments constitutifs de bras (25, 26), le second élément constitutif de bras (26) étant situé plus près de l'effecteur d'extrémité (29) que ne l'est le premier élément constitutif de bras (25) ;
les mécanismes d'entraînement (35, 36) incluent
une unité d'entraînement (35D) fixée au premier élément constitutif de bras (25) et configurée pour présenter un actionneur (36D) et un réducteur de vitesse (37D) fixé à l'actionneur (36D) ;
dans lequel les mécanismes d'entraînement (35, 36) sont **caractérisés par**
un arbre de transmission de puissance (55, 55Y, 55Z), l'arbre de transmission de puissance (55, 55Y, 55Z) étant fixé au réducteur de vitesse (37D) et au second élément constitutif de bras (26), de sorte que l'arbre de transmission de puissance (55, 55Y, 55Z) fasse partie d'un élément de liaison reliant les premier et second éléments constitutifs de bras (25, 26) l'un à l'autre et configuré pour transmettre la puissance de l'unité d'entraînement (35D) au second élément constitutif de bras (26) ; et
une pluralité de jauges de contrainte (41, 42) installées sur l'arbre de transmission de puissance (55, 55Y, 55Z) et chacune étant configurée pour détecter la contrainte provoquée dans l'arbre de transmission de puissance (55, 55Y, 55Z), dans lequel la pluralité de jauges de contrainte (41, 42) sont fixées soit à une surface extérieure (61) de l'arbre de transmission de puissance (55, 55Y), qui est pleine ou creuse, soit à la surface intérieure (62Z) de l'arbre de transmission de puissance (55Z), qui est creuse, ou certaines des jauges de contrainte de tension/compression (41) et des jauges de contrainte de cisaillement (42) sont montées sur la surface extérieure (61) de l'arbre de transmission de puissance (55, 55Y, 55Z), qui est creuse, et les autres sont montées sur la surface intérieure (62) de l'arbre de transmission de puissance (55, 55Y, 55Z), qui est creuse, et
le dispositif de commande (93) inclut une unité de détermination (5102), l'unité de détermination (5102) étant configurée pour déterminer l'amplitude et la direction d'une force externe exercée sur le corps de robot (21), sur la base de signaux de détection délivrés en sortie par les jauges de contrainte (41, 42), le dispositif de commande (93) étant configuré pour entraîner et commander l'unité d'entraînement (35D) sur la base des résultats déterminés pour l'amplitude et la direction de la force externe.

2. Robot industriel (15) selon la revendication 1, dans lequel
les jauges de contrainte (41, 42) sont agencées dans une position désaxée sur l'arbre de transmission de puissance (55, 55Y, 55Z), la position désaxée étant située dans une plage allant d'une partie fixe du réducteur de vitesse (37D) sur celui-ci à une partie fixe du second élément constitutif de bras (26) sur celui-ci et étant désaxée plus près de la partie fixe du réducteur de vitesse (37D) que de la partie fixe du second élément constitutif de bras (26), de sorte que les jauges de contrainte (41, 42) soient décalées en position du côté de la partie fixe du réducteur de vitesse (37D).

3. Robot industriel (15) selon la revendication 2, dans lequel
les jauges de contrainte (41, 42) sont agencées de manière à être éloignées de la proximité de la partie fixe du réducteur de vitesse (37D) sur l'arbre de transmission de puissance (55, 55Y, 55Z).

4. Robot industriel (15) selon l'une quelconque des revendications 1 à 3, dans lequel
l'arbre de transmission de puissance (55, 55Y, 55Z) est fourni comme un arbre creux présentant des surfaces intérieure et extérieure (61, 62 ; 61Y, 62 ; 61Z, 62Z),
dans lequel le câblage d'une unité d'entraînement (35D) qui fait partie du mécanisme d'entraînement (35, 36) est agencé sur l'une des surfaces intérieure et extérieure (61, 62 ; 61Y, 62 ; 61Z, 62Z) de l'arbre de transmission de puissance (55, 55Y, 55Z), tandis que les jauges de contrainte (41, 42) sont agencées sur l'autre des surfaces intérieure et extérieure (61, 62 ; 61Y, 62 ; 61Z, 62Z) de l'arbre de transmission de puissance (55, 55Y, 55Z).
